# EUROPEAN PATENT APPLICATION

(11) **EP 3 043 554 A1**
(43) Date of publication of application: **13.07.2016**
(21) Application number: 16150433.7
(22) Date of filing: 07.01.2016
(51) Int. Cl.: H04N 7/15, H04N 7/14

(54) **TRANSMISSION SYSTEM, INFORMATION PROCESSING APPARATUS, TRANSMISSION METHOD AND RECORDING MEDIUM**

(30) Priority: 09.01.2015 JP 2015003313
(71) Applicant: Ricoh Company, Ltd., Tokyo 143-8555 (JP)
(72) Inventor: HOMMA, Takeshi, Tokyo, 143-8555 (JP); ASAI, Takahiro, Tokyo, 143-8555 (JP)
(74) Representative: Schwabe - Sandmair - Marx

(57) **Abstract**

A transmission system includes a request source terminal (10) including a first transmission unit (11) configured to send a transmission request including communication identification information of a destination; and an information processing apparatus (50) including a reception unit (51) configured to receive the transmission request; a readout unit (59) configured to read out from a storage device (5000), identification information registration information (5001) in which communication identification information of a first terminal and communication identification information of a user who uses the first terminal are registered, which is associated with the communication identification information of the first terminal; and a determination unit (54) configured to determine a terminal of the destination to be called in response to the transmission request according to whether the communication identification information of the destination included in the transmission request is registered in the identification information registration information as the communication identification information of the user.

## Description

### BACKGROUND OF THE INVENTION

### 1. Field of the Invention

The disclosures herein generally relate to a transmission system, an information processing apparatus, a transmission method and a computer readable recording medium storing a program for causing a computer to execute a process.

### 2. Description of the Related Art

Video conference systems have been known as an example of a transmission system in which users conduct a video conference among a plurality of terminal devices via a communication network such as the Internet. In such a video conference system, image data and voice data are sent from one terminal device. Another terminal device receives these image data and voice data, and displays the image data on a display device or the like or outputs voice from a speaker, thereby a video conference can be conducted among these terminal devices.

Incidentally, with the development in cloud computing, various devices become able to use a cloud service. The video conference also may be provided to various terminal devices as a cloud service by using cloud computing. For example, a user can participate in a video conference by using not only a terminal dedicated to video conference but also a user's own smartphone, a tablet type terminal or the like. Therefore, the user can participate in the video conference from any of the various types of terminal devices and can use a service attached to the video conference.

In a case of applying a video conference to a cloud computing, it becomes possible to retain information which the terminal device displays on a screen of the terminal device, setting information for the terminal device, an address book or the like on a network, not in the terminal device itself. The terminal device acquires information linked to identification information such as an ID of the terminal device or the like via the network.

However, when information on the network is linked to the identification information of the terminal device, the following inconvenience may be caused in a case where the terminal device is shared by a plurality of users. For example, destination addresses of all users using a terminal device are registered in the address book, and in order to find a desired address an enormous amount of time and effort are required. Moreover, there may be a destination address which is not desired to be shared with another user. It is not preferable to register such a destination address to the address book which is shared by respective users.

Then, a technique that the cloud service authenticates not only a terminal device but also a user who uses a terminal device has been proposed (See, for example, Japanese Unexamined Patent Application Publication No. 2014-075074). Japanese Unexamined Patent Application Publication No. 2014-075074 discloses a communication system in which a cloud service switches a destination list according to a result of user authentication and sends to a terminal device.

Moreover, a technique of displaying a name of a user who uses a terminal device on a terminal device of another user (for example, see Japanese Unexamined Patent Application Publication No. 2014-060551) discloses a transmission system in which a user causes a mobile terminal storing the user's name and a terminal device to communicate with each other by using Near Field Communication (NFC) or the like, and sends the name to the terminal device of a communication partner. The terminal device, which receives the name, can display the name with identification information of the communication partner.

### SUMMARY OF THE INVENTION

It is a general object of at least one embodiment of the present invention to provide an information processing apparatus, a transmission method and a computer-readable recording medium storing a program for causing a computer to execute a process that substantially obviate one or more problems caused by the limitations and disadvantages of the related art.

In one embodiment, a transmission system includes a request source terminal including a first transmission unit configured to send a transmission request including communication identification information of a destination; and an information processing apparatus including a reception unit configured to receive the transmission request; a readout unit configured to read out from a storage device, identification information registration information in which communication identification information of a first terminal and communication identification information of a user who uses the first terminal are registered, the communication identification information of the first terminal and the communication identification information of the user being associated with each other; and a determination unit configured to determine a terminal of the destination to be called in response to the transmission request according to whether the communication identification information of the destination included in the transmission request is registered in the identification information registration information as the communication identification information of the user.

In another embodiment, an information processing apparatus includes a reception unit configured to receive a transmission request including communication identification information of a destination from a request source terminal; a readout unit configured to read out from a storage device, identification information registration information in which communication identification information of a first terminal and communication identification information of a user who uses the first terminal are registered, the communication identification information of the first terminal and the communication identification information of the user being associated with each other; and a determination unit configured to determine a terminal of the destination to be called in response to the transmission request according to whether the communication identification information of the destination included in the transmission request is registered in the identification information registration information as the communication identification information of the user.

In yet another embodiment, a transmission method includes sending from a request source terminal, a transmission request including communication identification information of a destination; receiving at an information processing apparatus the transmission request; reading out from a storage device, identification information registration information in which communication identification information of a first terminal and communication identification information of a user who uses the first terminal are registered, the communication identification information of the first terminal and the communication identification information of the user being associated with each other; and determining a terminal of the destination to be called in response to the transmission request according to whether the communication identification information of the destination included in the transmission request is registered in the identification information registration information as the communication identification information of the user.

In still another embodiment, a non-transitory computer-readable storage medium stores a program for causing a computer of an information processing apparatus to execute a process of calling a terminal of a destination in response to a transmission request from a request source terminal. The process includes receiving the transmission request including communication identification information of the destination; reading out from a storage device, identification information registration information in which communication identification information of a first terminal and communication identification information of a user who uses the first terminal are registered, the communication identification information of the first terminal and the communication identification information of the user being associated with each other; and determining the terminal of the destination to be called in response to the transmission request according to whether the communication identification information of the destination included in the transmission request is registered in the identification information registration information as the communication identification information of the user.

### BRIEF DESCRIPTION OF THE DRAWINGS

Other objects and further features of embodiments will become apparent from the following detailed description when read in conjunction with the accompanying drawings, in which:
FIG. 1 is a diagram for explaining an example of a utility form of a transmission system according to a present embodiment;
FIG. 2 is a schematic view illustrating an example of the transmission system according to the present embodiment;
FIG. 3 is a diagram illustrating an example of a hardware configuration of a transmission terminal according to the present embodiment;
FIG. 4 is a diagram illustrating an example of a transmission management system, a relay apparatus and a program provision system according to the present embodiment;
FIG. 5 is a functional block diagram illustrating an example of respective terminals, an apparatus and a system configuring the transmission system according to the present embodiment;
FIG. 6 is a sequence diagram illustrating an example of a procedure at a stage of preparation for starting communication among a plurality of transmission terminals;
FIG. 7 is a diagram illustrating a display example of a destination list according to the present embodiment;
FIG. 8 is a sequence diagram illustrating an example of a procedure of a user of the transmission terminal requiring the transmission management system of authentication according to the present embodiment;
FIGs. 9A to 9D are diagrams for explaining transition of a destination list screen displayed on' a display device of the transmission terminal according to the present embodiment;
FIG. 10 is a sequence diagram illustrating an example of a procedure of a user of one transmission terminal calling a user using another transmission terminal as a destination according to the present embodiment;
FIG. 11 is a flowchart illustrating an example of a procedure of operating the transmission management system according to the present embodiment;
FIGs. 12A and 12B are diagrams illustrating examples of a destination list screen according to the present embodiment;
FIG. 13 is a flowchart illustrating an example of a procedure of the transmission terminal displaying the destination list screen according to the present embodiment;
FIG. 14 is a diagram illustrating an example of a destination list screen generated from a destination list management table, as shown in TABLE 9, and displayed by the transmission terminal 10aa according to the present embodiment; and
FIG. 15 is a diagram illustrating an example of a destination list screen displayed on the display device of the transmission terminal according to the present embodiment.

### DESCRIPTION OF THE PREFERRED EMBODIMENTS

In the following, embodiments of the present invention will be described with reference to the accompanying drawings.

### <Utility form of transmission system>

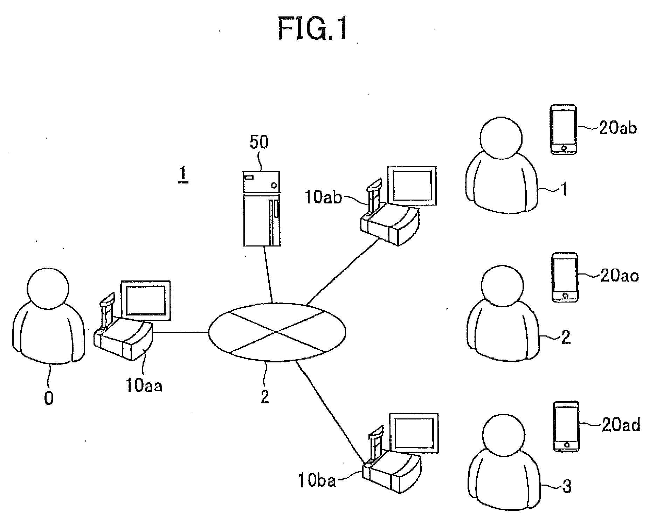

FIG. 1 is a diagram for explaining an example of a utility form of a transmission system 1 according to a present embodiment. Transmission terminals 10aa, 10ab, 10ba are connected to one another via a network 2 for a communications connection. Moreover, three users 1 to 3 have communication IDs (an example of communication identification information), respectively, and can be coupled to the network 2 using mobile terminals 20ab, 20ac and 20ad. Moreover, a transmission management system 50 is a server for performing a call control.

On the other hand, three users 1 to 3 are authenticated by the transmission management system according to communication IDs allocated to the users 1 to 3 (communication IDs of the mobile terminals 20ab, 20ac and 20ad) without using the mobile terminals 20ab, 20ac and 20ad, and thereby can use any transmission terminal 10 (in FIG. 1, any of the transmission terminals 10ab and 10ba).

In the following, logging in the transmission management system 50 by the users 1 to 3 applying (inputting) their own communication IDs to the transmission terminal 10ab or 10ba will be referred to as "logging in using transmission terminal".

However, in a case where the users 1 to 3 perform the logging in using transmission terminal in the transmission terminal 10ab or 10ba, since the users 1 to 3 usually log in the transmission management system 50 by using the mobile terminals 20ab, 20ac and 20ad, for the user 0 it is difficult to identify which transmission terminal 10 the user with whom the user 0 desires to communicate uses (which of the users 1 to 3). Moreover, even if the user is identified, it is difficult to determine whether to call the transmission terminal 10 or to call the mobile terminal 20.

Then, in the present embodiment, a transmission system 1 in which even if there are destination terminals of the transmission terminal 10 and the mobile terminal 20 for the user 0, by specifying an aimed user with whom the user 0 desires to communicate, the transmission terminal 10 or the mobile terminal 20 is called.

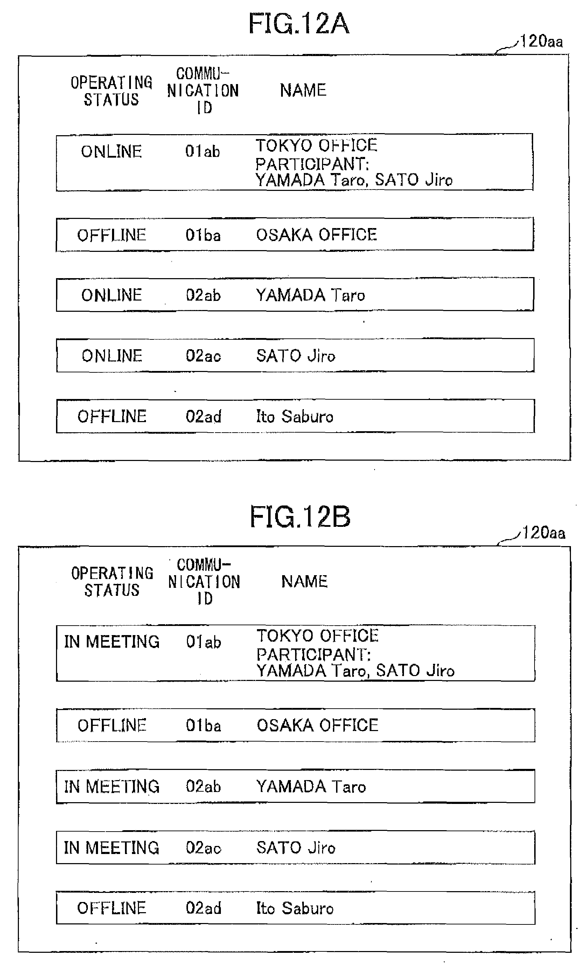

As described later, in a case where the user 0 desires to communicate with the users 1 to 3, it is not necessary to determine whether to call the mobile terminal 20 or to call the transmission terminal 10. However, depending on a configuration of a destination list screen, which will be described later, the user 0 can determine whether to call the mobile terminal 20 or to call the transmission terminal 10 (a destination list screen in FIG. 12A).

Meanwhile, the communication ID is identification information used for an authentication or the like in a case where a user enjoys a service that the transmission system 1 provides. To the transmission terminal 10, which is a terminal specifically for a video conference, a dedicated communication ID is given. Moreover, a communication ID may be assigned to users so that the users can log in the transmission system by a general-purpose terminal such as the mobile terminal 20 or the like.

### <Overall configuration>

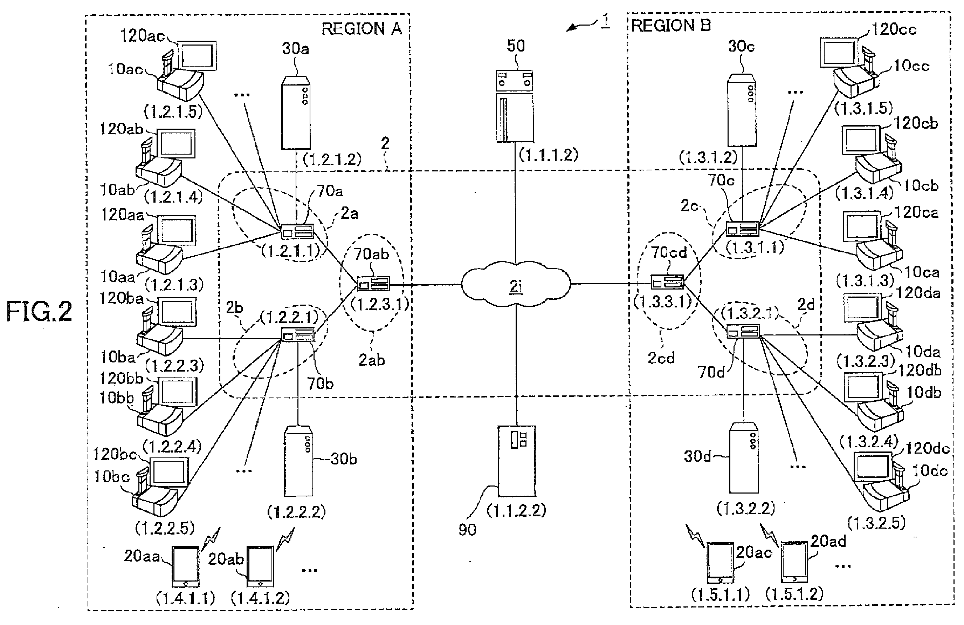

FIG. 2 is a schematic diagram illustrating an example of a transmission system 1 according to the present embodiment. The transmission system 1 is a communication system used for mutually exchanging information, emotional expressions or the like among a plurality of transmission terminals via the transmission management system 50. Examples of such a transmission system 1 may include a video conference system, a videophone system, an audio conference system, a voice-call system, a personal computer (PC) screen sharing system, a text chat system and the like. Moreover, the transmission system 1 includes a data provision system which sends content data from one terminal to another terminal in a one-way direction via the transmission management system 50.

In the present embodiment, the transmission system will be explained assuming a system in which a video conference can be performed, as an example of a communication system.

The transmission system 1, shown in FIG. 2, includes a plurality of transmission terminals (10aa, 10ab, ...), a plurality of mobile terminals (20aa, 20ab, ...), display devices (120aa, 120ab ...) for the respective transmission terminals (10aa, 10ab, ...), a plurality of relay apparatus (30a, 30b, ...), a transmission management system 50 and a program provision system 90.

The plurality of transmission terminals 10 send and receive image data and audio data as examples of content data. That is, the plurality of transmission terminals 10 are video conference terminals that can use a video conference service. In the present embodiment, the transmission terminals 10 are assumed to be terminals specific for video conference.

On the other hand, the plurality of mobile terminals 20 send and receive image data and audio data as examples of content data. The mobile terminal may be able to send and receive text data. That is, the plurality of mobile terminals 20 may use not only the video conference service but also a text chat service. In the present embodiment, the mobile terminals 20 may be, unless otherwise stated, general purpose mobile terminals such as tablet terminals, mobile phone terminals, smart phones, general terminals such as personal computers, car navigation terminals, projection apparatus such as projectors, or electronic blackboards. Meanwhile, the mobile terminals 20 are coupled wirelessly to the communication network 2 via a mobile phone communication network or Wireless Fidelity (Wi-Fi), for example.

As is evident from a hardware configuration, which will be described later, the transmission terminal 10 and the mobile terminal 20a are referred to as an "information processing apparatus".

The transmission terminal 10 and the mobile terminal 20 are managed by the transmission management system 50 that manages call control of a communication system.

Meanwhile, in the following, any one of the plurality of transmission terminals (10aa, 10ab, ...) may be referred to as a "transmission terminal 10", and any one of the plurality of mobile terminals (20aa, 20ab, ...) may be referred to as a "mobile terminal 20".

Moreover, any one of the plurality of display devices (120aa, 120ab, ...) may be referred to as a "display device 120", and any one of the plurality of relay apparatuses (30a, 30b, ...) may be referred to as a "relay apparatus 30". Furthermore, a terminal that requests to start a video conference from one transmission terminal 10 or mobile terminal 20 to another transmission terminal 10 or mobile terminal 20 may be referred to as a "request source terminal". Furthermore, a terminal receiving the request to start the video conference may be referred to as a "destination terminal".

Moreover, in the transmission system 1, a management information session for sending/receiving variety of management information is established via the transmission management system between the request source terminal and the destination terminal. Moreover, a session for sending/receiving content data is established via the relay apparatus 30 between the request source terminal and the destination terminal. Meanwhile, in the session for content data, it is not necessarily required to send/receive via the relay apparatus 30, but a session may be established via the transmission management system 50, or the request source terminal and the destination terminal may directly establish a session.

The relay apparatus 30 relays content data, as described above, among the plurality of transmission terminals 10 and the mobile terminal 20. Meanwhile, a session can be established between the transmission terminals and the mobile terminal 20.

The transmission management system 50 performs a login authentication of the transmission terminal 10 and the mobile terminal 20, management of a communication state and a management of a destination list, notifies a destination of content data to the relay apparatus 30, and causes the relay apparatus 30 to manage a communication state, or the like.

A plurality of routers (70a, 70b, 70c, 70d, 70ab, 70cd) select an optimum path for content data. Meanwhile, in the following, any of the routers (70a, 70b, 70c, 70d, 70ab, 70cd) may be referred to as a "router 70".

The program provision system 90 stores a program for terminal for causing the transmission terminal 10 or the mobile terminal 20 to realize various functions in a hard disk (HD) 204, which will be described later, and can send the program for terminal to the transmission terminal 10 or the mobile terminal 20. Moreover, the program provision system 90 stores also a program for relay apparatus for causing the relay apparatus 30 to realize various functions in the HD 204, and can send the program for relay apparatus to the relay apparatus 30. Moreover, the program provision system 90 stores also a program for transmission management 320 for causing the transmission management system 50 to realize various functions in the HD 204, and can send the program for transmission management 320 to the transmission management system 50.

Incidentally, the transmission terminals (10aa, 10ab, 19ac, ...), the relay apparatus 30a and the router 70a are communicatively coupled to each other by a LAN 2a. The transmission terminals (10ba, 10bb, 10bc, ...), the mobile terminals (20aa, 20ab, ...), the relay apparatus 30b and the router 70b are communicatively coupled to each other by a LAN 2b. Moreover, the LAN 2a and the LAN 2b are communicatively coupled to each other by the dedicated line 2ab including the router 70ab, and are configured in a predetermined region "A". For example, the region "A" is Japan, the LAN 2a is configured in Tokyo office, and the LAN 2b is configured in Osaka office. Moreover, the mobile terminals (20aa, 20ab, ...) are used in the regions "A".

On the other hand, the transmission terminals (10ca, 10cb, 10cc, ...), the relay apparatus 30c, and the router 70c are communicatively coupled to each other by a LAN 2c. The transmission terminals (10da, 10db, 10dc, ...), the mobile terminals (20ac, 20ad, ...), the relay apparatus 30d, and the router 70d are communicatively coupled to each other by a LAN 2d. Moreover, the LAN 2c and the LAN 2d are communicatively coupled to each other by the dedicated line 2cd including the router 70cd, and are configured in a predetermined region "B". For example, the region "B" is the United States, the LAN 2c is configured in the New York office, and the LAN 2d is configured in the Washington D.C. office. Moreover, the mobile terminals (20ac, 20ad, ...) are used in the region "B",

The region "A" and the region "B" are communicatively coupled to each other via the Internet 2i from the router (70ab, 70cd), respectively.

Meanwhile, the transmission terminal 10 is not necessarily required to be connected via the dedicated line, but may be connected directly to the Internet 2i.

Moreover, the transmission management system 50 and the program provision system 90 are communicatively coupled to the transmission terminal 10, the mobile terminal 20 and the relay apparatus 30 via the Internet 2i. The transmission management system 50 or the program provision system 90 may be arranged in the region "A" or in the region "B", or may be arranged in a region other than these regions.

Meanwhile, in the present embodiment, a communication network 2 is configured by the LAN 2a, the LAN 2b, the dedicated line 2ab, the Internet 2i, the dedicated line 2cd, the LAN 2c, and the LAN 2d. The communication network 2 may include, in addition to the wired communication, a part where a communication according to WiFi, Bluetooth (trademark registered) or the like is performed.

Moreover, in FIG. 2, a combination of four integers, indicated below each of the transmission terminals 10, the mobile terminals 20, the relay apparatuses 30, the transmission management apparatus 50, the routers 70 and the program provisioning apparatus 90, represents an IP (Internet Protocol) address in a general form of IPv4 simply. For example, the IP address of the transmission terminal 10aa is ''1.2.1.3''. Moreover, IPv6 may be adopted instead of IPv4, but IPv4 is employed for simplicity in the present embodiment.

Meanwhile, each of the transmission terminals 10 or each of the mobile terminals 20 may be used not only for communication between different offices or between different rooms in the same office, but also for communication in the same room, between indoor and outdoor, or between outdoors. In a case where each of the transmission terminals 10 or each of the mobile terminals is used outdoors, wireless communication, such as using a mobile phone communication network, is performed.

### <Hardware configuration>

### <<Transmission terminal>>

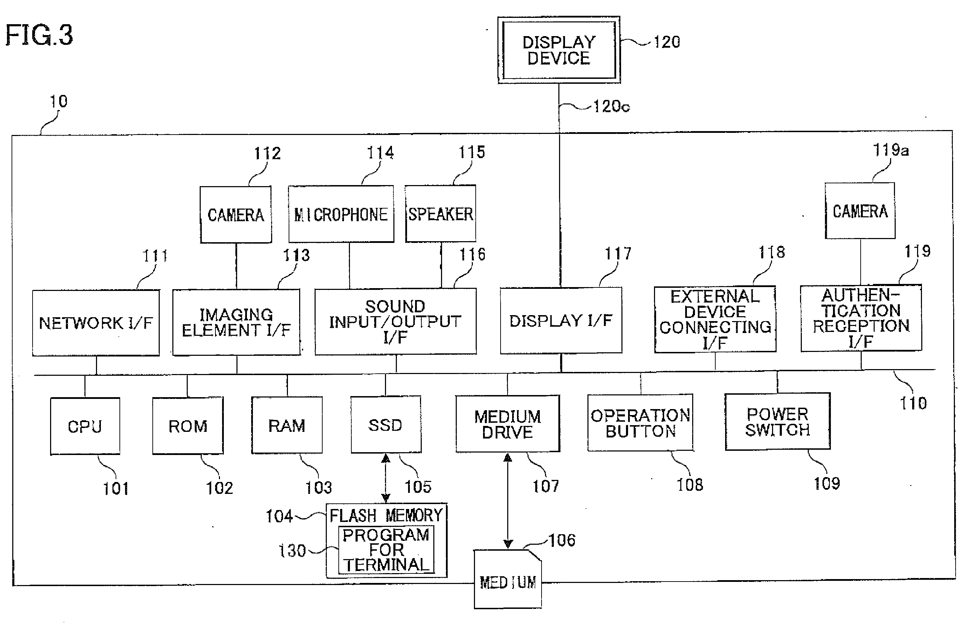

Next, the hardware configuration of the transmission terminal 10 will be described. FIG. 3 is a hardware configuration diagram illustrating the transmission terminal 10 according to the present embodiment. As illustrated in FIG. 3, the transmission terminal 10 includes a central processing unit (CPU) 101 configured to control overall operations of the transmission terminal 10 a read-only memory (ROM) 102 storing a program for driving the CPU 100 such as an IPL (Initial Program Loader), a random access memory (RAM) 103 utilized as a work area of the CPU 101, a flash memory 104 configured to store a program for terminal 130 and various data such as image data or audio data, a solid-state drive (SSD) 105 configured to control retrieval and writing (storing) of the various data in the flash memory 104 and the like based on control by the CPU 101, a medium drive 107 configured to control retrieval and writing (storing) of data into a recording medium 106 such as a flash memory, an operations button 108 operated for selecting an address of the transmission terminal 10 or the like, a power switch 109 for switching ON/OFF of power of the transmission terminal 10, and a network I/F (Interface) 111 for transmitting data utilizing the communication network 2.

The transmission terminal 10 further includes a built-in camera 112 configured to capture a subject based on control by the CPU 101 and obtain image data, an imaging element I/F 113 configured to control driving of the camera 112, a built-in microphone 114, which receives an audio input, a built-in speaker 115, which outputs sound, a sound input/output I/F 116 that processes inputting/outputting of a sound signal between the microphone 114 and the speaker 115 under control of the CPU 101, a display I/F 117 configured to transmit image data to the external display device 120 based on control by the CPU 101, an external device connecting I/F 118 configured to connect various external devices, an authentication reception I/F 119, and a bus line 110 such as an address bus or a data bus for electrically connecting the each of the above-described elements as illustrated in FIG. 3.

The display device 120 is a display unit, such as a liquid crystal or an organic electro-luminescent (EL) material configured to display an image of a subject, an icon for operation or the like. Moreover, the display device 120 is connected to the display I/F 117 via the cable 120c. The cable 120c may be an analog RGB (VGA) cable, a component video cable, a HDMI (trademark registered) (High-Definition Multimedia Interface) cable, or a DVI (trademark registered) (Digital Video Interface) cable.

The camera 112 includes a lens and a solid-state imaging element configured to convert light into electric signals to produce an image (video) of the subject. As the solid-state imaging element, a complementary metal oxide semiconductor (CMOS), a charge-coupled device (CCD) or the like is employed.

To the external device connecting I/F 118, external devices such as an external camera, an external microphone, and an external speaker may be coupled via a universal serial bus (USB) cable or the like. In a case of connecting an external camera to the external device connecting I/F 118, the external camera is driven according to the control by the CPU 101 in priority to the built-in camera 112. Likewise, in a case of connecting the external microphone or the external speaker to the external device connecting I/F 118, the external microphone or external speaker is driven according to the control by the CPU 101 in priority to the built-in microphone 114 or the built-in speaker 115. Meanwhile, the transmission terminal 10 is not necessarily provided with the built-in camera 112, and may be connected with only the external camera via the external device connecting I/F 118. Similarly, the transmission terminal 10 is not necessarily provided with the built-in microphone 114 or the built-in speaker 115, and may be connected with only the external microphone or the external speaker via the external device connecting I/F 118. Moreover, the display device 120 of the transmission terminal 10 is coupled to the display I/F 117 via the cable 120c. But, the present embodiment is not limited to this. The display device 120 may be a built-in display unit in the transmission terminal 10.

Moreover, the transmission terminal 10 may be provided with an external storage medium I/F for reading an external storage medium, such as a Secure Digital (SD) memory card or a Subscriber Identity Module (SIM) card, in addition to the external device connecting I/F 118.

Meanwhile, the recording medium 106 is removable from the transmission terminal 10. Moreover, if the recording medium 106 is a nonvolatile memory in which data are retrieved or written based on control by the CPU 101, the recording medium 106 is not limited to the flash memory 104, and may be an electrically erasable and programmable ROM (EEPROM).

The authentication reception I/F 119 is an interface for receiving an input of authentication information from a user. Specifically, the authentication reception I/F 119 includes an IC card reader (for example, NFC (Near Field Communication)), a readout device for an SD card or a SIM card, or the like.

Moreover, the authentication reception I/F 119 may be an interface for connecting a camera 119a or may be the camera 119a. For the convenience of explanation in the present embodiment, the camera 119a is illustrated separately from the camera 112. But, the camera 112 can be shared with the camera 119a. The camera 119a captures a QR code (trademark registered) or a bar code that the mobile terminal 20 displays on the display unit. The QR code or the bar code includes encoded authentication information of the user. Therefore, the authentication reception I/F 119 decodes a captured image of the QR code or the bar code and extract the authentication information. In this case, the transmission terminal 10 can acquire the authentication information of the user without the above-described IC card reader.

Furthermore, the program for terminal 130 may be recorded as a file in an installable format or in an executable format on a computer-readable recording medium such as the recording medium 106, to be distributed. Moreover, the program for terminal 130 may be stored in the ROM 102 instead of the flash memory 104.

### [Mobile Terminal]

Since the hardware configuration of the mobile terminal 20 and the hardware configuration of the transmission terminal 10 overlap considerably, an explanation of the hardware configuration of the mobile terminal 20 will be omitted, assuming that a difference in the hardware configuration may not pose a problem for configuring the transmission system 1.

### «transmission management system, relay apparatus, program provision system»

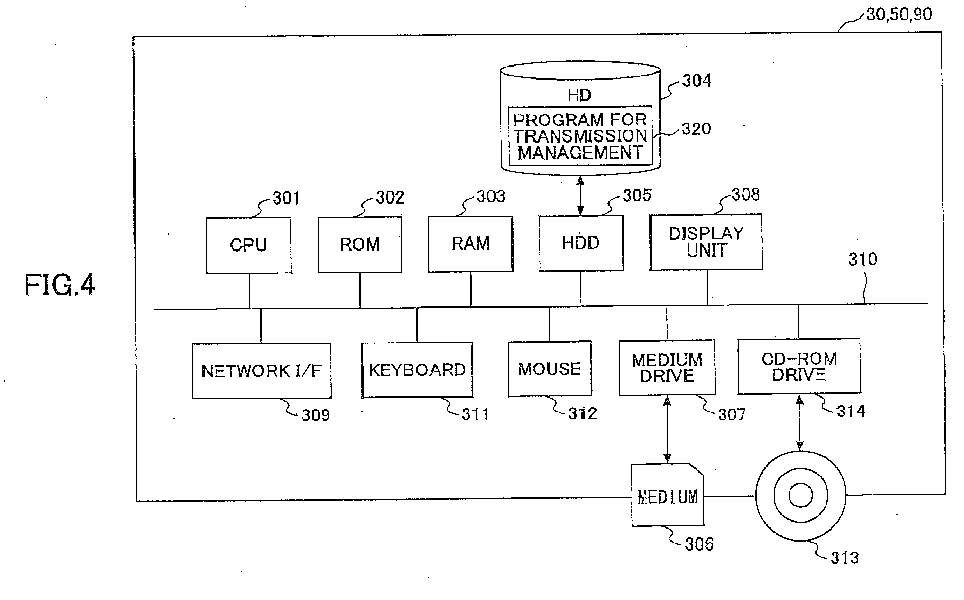

Next, a hardware configuration of the transmission management system 50, the relay apparatus 30 and the program provision system 90 will be described, FIG. 4 is a hardware configuration diagram illustrating an example of the transmission management system 50, the relay apparatus 30 and the program provision system 90 according to the present embodiment.

Meanwhile, the hardware configuration of the illustrated transmission management system 50 or the like is not necessarily stored in a chassis or provided in a block. But, it shows a hardware element with which the transmission management system 50 or the like preferably is provided. Moreover, since it corresponds to cloud computing, a physical configuration such as the transmission management system 50 according to the present embodiment may not be fixed, and it may be configured by dynamically connecting or receiving a hardware resource according to its load.

The transmission management system 50 includes a central processing unit (CPU) 301 configured to control overall operations of the transmission management system 50, a read only memory (ROM) 302 storing a program for driving the CPU 301 such as an IPL, a random access memory (RAM) 303 utilized as a work area of the CPU 301, a hard disk (HD) 304 configured to store various data such as a program for transmission management 320, a hard disk drive (HDD) 305 configured to control retrieval and writing (storing) of the various data in the HD 304 based on the control of the CPU 301, a medium drive 307 configured to control retrieval and writing (storing) of data into a recording medium 306 such as a flash memory, a display unit 308 configured to display various information such as a cursor, menus, windows, characters and images, a network I/F 309 for transmitting data utilizing the communication network 2, a keyboard 311 including plural keys for inputting the characters, numerals, and various instructions, a mouse 312 for selecting or executing various instructions, selecting items to be processed, and moving the cursor, a CD-ROM drive 314 configured to control retrieval or writing of data in the compact disk read-only memory (CD-ROM) 313 as an example of a removable recording medium, and a bus line 310 such as an address bus or a data bus for electrically connecting the elements and devices with one another illustrated in FIG. 4.

Meanwhile, the above-described program for transmission management 320 may also be recorded in an installable format or in an executable format on a computer-readable recording medium such as the recording medium 306 or the CD-ROM 313 to be distributed. Moreover, the above-described program for the transmission management 320 may be stored in the ROM 302 instead of the HD 304.

Moreover, since the relay apparatus 30 and the program provision system 90 have a hardware configuration that is the same as or similar to that of the above-described transmission management system 50, a description thereof will be omitted. However, the HD 304 of the relay apparatus 30 stores a program for relay apparatus for controlling the relay apparatuses 30, and the HD 304 of the program provision system 90 stores a program for program provision for controlling the program provision system 90. Also in this case, the program for relay apparatus and the program for program provision may be stored in a file in an installable format or an executable format on a computer-readable recording medium such as the recording medium 306 or the CD-ROM 313 and distributed. Moreover, the program for relay apparatus and the program for program provision may be stored on any desired memory such as the ROM 302, instead of the HD 304.

Meanwhile, as other examples of the removable recording medium, it may be configured to record on a computer readable recording medium, such as a compact disc recordable (CD-R), a digital versatile disk (DVD) or a BLU-RAY DISC, to be provided.

### [Functional Configuration]

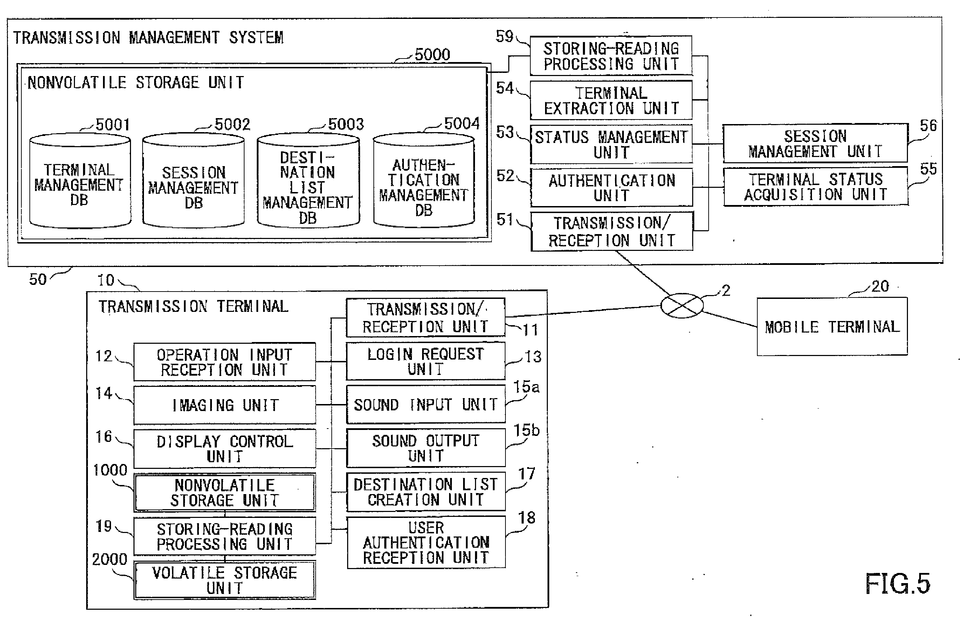

Next, a functional configuration of the present embodiment will be described with reference to FIG. 5. FIG. 5 is a functional block diagram illustrating an example of each of the terminals, the apparatuses, and the systems configuring the transmission system 1 according to the present embodiment.

In FIG. 5, the transmission terminal 10, the mobile terminal 20 and the transmission management system 50, and the common information management apparatus are connected via the communication network 2 such that they carry out data communications with one another. Meanwhile, the relay apparatus 30 and the program provision system 90, shown in FIG. 2, are omitted in FIG. 5, since they are not relevant directly in the present embodiment. Moreover, since the mobile terminal 20 is provided with almost the same function as that of the transmission terminal 10, the function of the mobile terminal 20 will be explained appropriately with the transmission terminal 10.

### <<Each Functional Configuration of Terminal>>

The transmission terminal 10 includes a transmission/reception unit 11, an operation input reception unit 12, a login request unit 13, an imaging unit 14, a sound input unit 15a, a sound output unit 15b, a display control unit 16, a destination list creation unit 17, and a user authentication reception unit 18 and a storing-reading processing unit 19.

Each part of the transmission terminal 10 is a function enabled or a means functioned by any of the respective members shown in FIG. 3 operating by an instruction from the CPU 101 according to the program for terminal 130 expanded on the RAM 103 from the flash memory 104.

Moreover, the transmission terminal 10 includes a volatile storage unit 2000 formed of the RAM 103, illustrated in FIG. 3, and a nonvolatile storage unit 1000 formed of the flash memory 104 illustrated in FIG. 3.

Next, the respective functional units of the transmission terminal 10 will be described in more detail with reference to FIGs. 3 and 5. The transmission/reception unit 11 of the transmission terminal 10 illustrated in FIG. 5 is enabled by instructions from the CPU 101 shown in FIG. 3 and the network I/F 111 illustrated in FIG. 3, and transmits/receives various data (or information) to/from other terminals, apparatuses, or systems via the communication network 2. The transmission/reception unit 11 starts receiving each piece of status information indicating a status of each of the transmission terminals as destination candidates from the transmission management system 50 before initiating communication with a desired destination terminal. Meanwhile, the status information not only includes an operating status (online or offline status) of the transmission terminal 10 or/and each of the mobile terminals 20, but also includes a detailed status such as engaging or away from his/her seat during the transmission terminal 10 (or/and mobile terminal 20) being online. In the following, as an example, a case where the status information indicates an operating status will be described.

The operation input reception unit 12 is enabled by instructions from the CPU 101 shown in FIG. 3, the operation button 108 and the power switch 109 shown in FIG. 3, and receives respective various types of inputs by users. For example, in a case where the user switches ON the power switch 109 shown in FIG. 3, the operation input reception unit 12 illustrated in FIG. 3 receives a power-ON signal to switches ON the power of the transmission terminal 10. The operation input reception unit is an example of a selection reception means.

The login request unit 13 is enabled by instructions from the CPU 101 shown in FIG. 3, and automatically sends login request information indicating that the user desires to login, information indicating a category of the terminal and a current IP address of the request source terminal to the transmission management system 50 via the communication network 2 from the transmission/reception unit 11, when the power-ON signal is received by the operation input reception unit 12 as a trigger.

Moreover, in a case where the user switches OFF the power switch 109 from a state of ON, after the transmission/reception unit 11 sends status information indicating turning power OFF to the transmission management system 50, the operation input reception unit 12 turns OFF the power completely. Accordingly, on the side of the transmission management system 50, it is possible to perceive that a power status of the transmission terminal 10 turns OFF from ON.

The imaging unit 14 is enabled by instructions from the CPU 101 shown in FIG. 3 and the camera 112 and the imaging element I/F 113, and captures an image of a subject and outputs image data obtained by this capturing.

The sound input unit 15a is enabled by instructions from the CPU 101 shown in FIG. 3 and the sound input/output I/F 116. After voice of the user is converted into a sound signal by the microphone 114, the sound input unit 15a inputs audio data regarding the sound signal.

The sound output unit 15b is enabled by instruction from the CPU 101 shown in FIG. 3 and the sound input/output I/F 116, outputs the sound signal regarding the audio data to the speaker 115 to cause the speaker 115 to output sound.

The display control unit 16 is enabled by instructions from the CPU shown in FIG. 3 and the display I/F 117 shown in FIG. 3, and controls the transmission of image data to the external display device 120. The display control unit 16 divides a screen into several display regions in order to display one or more image data on the display device 120, and allocates the image data to the respective display regions. For examples, the display control unit 16 identifies a transmission terminal 10 in the other location or a mobile terminal 20 sending audio data, a sound volume of which is the greatest, and allocates image data to display regions so that image data sent from the transmission terminal 10 or the mobile terminal 20 are preferentially displayed on the display device 120.

The destination list creation unit 17 is enabled by instruction from the CPU shown in FIG. 3, and creates and updates a destination list, based on destination status information received from the transmission management system 50 (operating status of a destination candidate terminal, and a transmission terminal 10 of a mobile terminal 20 as a destination candidate).

The user authentication reception unit 18 is enabled by instruction from the CPU shown in FIG. 3, and the SSC 105 shown in FIG. 3, and receives authentication information of a user inputted via the authentication reception I/F 119. The authentication information includes a communication ID assigned to the user and a password. Or, the authentication information may include only the communication ID and the user inputs the password by using the operation button 108. The communication ID assigned to the user is a communication ID to be authenticated from the transmission management system 50 by the user using the mobile terminal 20. The user authentication reception unit 18 is an example of an identification information reception means.

The storing-reading processing unit 19 is executed by instruction from the CPU 101 shown in FIG. 3 and the SSD 105 shown in FIG. 3, and stores various data in the nonvolatile storage unit 1000 or retrieves various data from the volatile storage unit 2000. The nonvolatile storage unit 1000 stores a communication identification (ID) for identifying a terminal of the transmission terminal 10 as a communication destination or a user, a password, and the like. Meanwhile, the communication ID and the password may not be stored in the nonvolatile storage unit 1000, but may be inputted by the user every time a login is required to the transmission management system 50, for example.

Moreover, the storing-reading processing unit 19 also stores various data in the volatile storage unit 2000 and retrieves various data from the volatile storage unit 2000. The storing-reading processing unit 19 overwrites image data or audio data in the volatile storage unit 2000 with new image data or audio data received from a destination terminal every time the transmission terminal 10 communicates with (talks to) the destination terminals. Among the image data and audio data, according to previous image data before being overwritten with new image data, the display device 120 displays an image, and according to previous audio data before being overwritten with new audio data, the speaker 115 outputs sound.

Meanwhile,
the communication ID and a relay apparatus ID, which will be described later, respectively represent pieces of identification information formed of language, characters, various symbols or the like for uniquely identifying a transmission terminal or a user using the transmission terminal and a relay apparatus 30. Moreover, the communication ID and the relay apparatus ID may be identification information formed by combining two or more of the languages, characters, various symbols and the like.

### «Functional configuration of transmission management system»

The transmission management system 50 includes a transmission/reception unit 51, an authentication unit 52, a status management unit 53, a terminal extraction unit 54, a terminal status acquisition unit 55, a session management unit 56 and a storing-reading processing unit 59. Each of the above-described units is a
function enabled or a means functioned by any of the respective members shown in FIG. 4 operating by an instruction from the CPU 301 according to the program for transmission management 320 expanded on the RAM 303 from the HD 304. Moreover, the transmission management system 50 includes a nonvolatile storage unit 5000 which retains memory of various data (or information) even if the power of the transmission management system 50 is OFF. The nonvolatile storage unit 5000 is formed of the HD 304 shown in FIG. 4. The nonvolatile storage unit 500 is an example of a storage device.

### (Session management table)

**[TABLE 1]**

| Session ID | Relay apparatus ID | Request source communication ID | Destination communication ID |
|---|---|---|---|
| se1 | 111a | 01aa | 01ab |
| se2 | 111b | 01ca | 01cb |
| se3 | 111d | 01bb | 01da |
| ... | ... | ... | ... |

The nonvolatile storage unit 5000 includes a session management DB 5002 formed of a session management table as shown in TABLE 1. In the session management table, for every session ID used for executing a session for selecting the relay apparatus 30, a relay apparatus ID of a relay apparatus 30 used for relaying data, a communication ID of a request source terminal and a communication ID of a destination terminal are managed associated with one another.

### (Destination list management table)

**[TABLE 2]**

| Communication ID | Communication ID of destination candidate |
|---|---|
| 01aa | 01ab, 01ba, 02ab, 02ac, 02ad |
| 01ab | 01aa, 01ba, 02ab, 02ac, 02ad |
| 01ba | 01aa, 01ab, 02ab, 02ac, 02ad |
| 02ab | 01aa, 01ab, 01ba, 02ac, 02ad |
| 02ac | 01aa, 01ab, 01ba, 02ab, 02ad |
| 02ad | 01aa, 01ab, 01ba, 02ab, 02ac |

The nonvolatile storage unit 5000 includes a destination list management DB 5003 formed of a destination list management table as shown in TABLE 2. In the destination list management table, with each communication ID of the request source terminal requesting a start of connection in a video conference (call request), communication IDs of all the transmission terminals 10 or the mobile terminals 20 of the destination candidates are associated and managed. This communication ID of a destination candidate is a transmission terminal 10 or a mobile terminal 20 that the request source terminal can start communication.

### (Terminal management table)

**[TABLE 3]**

| Communication ID | Operating status | Name | IP address | Participant ID | Authentication terminal ID |
|---|---|---|---|---|---|
| 01aa | online | Headquarters | 1.2.1.3 | | |
| 01ab | online | Tokyo office | 1.2.1.4 | 02ab, 02ac | |
| 01ba | offline | Osaka office | 1.2.2.3 | | |
| 02ab | online | YAMADA Taro | 1.4.1.2 | | 01ab |
| 02ac | online | SATO Jiro | 1.5.1.1 | | 01ab |
| 02ad | offline | Ito Saburo | 1.5.1.2 | | |

The nonvolatile storage unit 5000 includes a terminal management table DB5001 formed of a terminal management table as shown in TABLE 3. In the terminal management table, for every communication ID of a transmission terminal 10, an operating status of the transmission terminal, a name in a case where the communication ID is a destination, an IP address of the terminal, a participant ID and a terminal authentication ID are managed associated one another. The terminal management table is an example of identification information registration information. Meanwhile, the participant ID means a communication ID of a user who performs a login using transmission terminal. The authentication terminal ID means a communication ID of a transmission terminal 10 which is used in a case where the login using transmission terminal is performed.

That is, in a case where the transmission management system 50 determines that an authentication is successful according to authentication information on a user that the user authentication reception unit 18 receives, a communication ID of the user who logs in using a transmission terminal is registered in the field of the participant ID. At this time, a communication ID of the transmission terminal 10 which is used is registered to the authentication terminal ID.

As shown in TABLE 3, with the communication IDs (01aa, 01ab, 01ba) of the transmission terminals 10, the communication ID of the user is associated as a participant ID. With the communication ID of the user, the communication ID of the transmission terminal 10 is associated as an authentication terminal ID.

The participant ID is an example of a using user, and the authentication terminal ID is an example of a used terminal. Moreover, the communication IDs (01aa, 01ab, 01ba) in TABLE 3 are examples of communication identification information of a first terminal recited in claims. The communication IDs (02ab, 02ac, 02ad) in TABLE 3 are examples of communication identification information of a user recited in claims. A second terminal recited in claims includes a transmission terminal 10 and a mobile terminal 20 of the communication ID in TABLE 3.

### (Authentication management table)

**[TABLE 4]**

| Communication ID | Password |
|---|---|
| 01aa | aaaa |
| 01ab | abab |
| 01ba | baba |
| 02ab | ABAB |
| 02ac | ACAC |
| 02ad | ADAD |

The nonvolatile storage unit 5000 includes an authentication management DB 5004 formed of a authentication management table as shown in TABLE 4. In the authentication management table, with every communication ID of a transmission terminal 10 or a user, a password of the transmission terminal 10 or the user is associated and managed.

Next, the respective functional configuration of the transmission management system 50 will be explained in detail. The transmission/reception unit 51 is executed by instructions from the CPU 301 shown in FIG. 4 and the network I/F 309 shown in FIG. 4, and sends/receives various data (or information) to/from another terminal, an apparatus or a system via a communication network 2.

The authentication unit 52 is executed by instructions from the CPU 301 shown in FIG. 4 and the network I/F 309 shown in FIG. 4, and authenticates a transmission terminal 10 or a user according to whether a combination of a communication ID and a password included in login request information received via the transmission/reception unit 51 coincides with the one that is registered in advance.

The status management unit 53 is enabled by instructions from the CPU 301 shown in FIG. 4, and, in order to manage an operating status of a request source terminal which requests to login, registers the operating status of the request source terminal, an IP address, a participant ID and an authentication terminal ID in the terminal management table associated with a communication ID or the like.

The terminal extraction unit 54 is enabled by instructions from the CPU 301 shown in FIG. 4, searches the destination list management table of the destination list management DB 5003 with the communication ID of the request source terminal that requests to login as a key, and reads out a communication ID of a candidate of a destination terminal that can be coupled to the request source terminal.

The terminal status acquisition unit 55 is enabled by instructions from the CPU 301 shown in FIG. 4, and acquires from the terminal management table an operating status, a name, a participant ID and an authentication terminal ID, which are associated with each communication ID as a candidate for the destination terminal extracted by the terminal extraction unit 54. The terminal status acquisition unit 55 determines based on the terminal management table whether to call a transmission terminal 10 or a mobile terminal 20.

The session management unit 56 is enabled by instructions from the CPU 301 shown in FIG. 4, stores a relay apparatus ID of a relay apparatus 30, which relays content data, a session ID, the communication ID of the request source terminal and a communication ID of a destination terminal in the session management DB 5002 of the nonvolatile storage unit 5000, associated with one another and manages them.

The storing-reading processing unit 59 is executed by instructions from the CPU shown in FIG. 4 and the HDD 305 shown in FIG. 4, and performs a process of storing various data in the nonvolatile storage unit 5000 or a process of reading various data stored in the nonvolatile storage unit 5000.

### <Authentication of transmission terminal and user, and display of destination list>

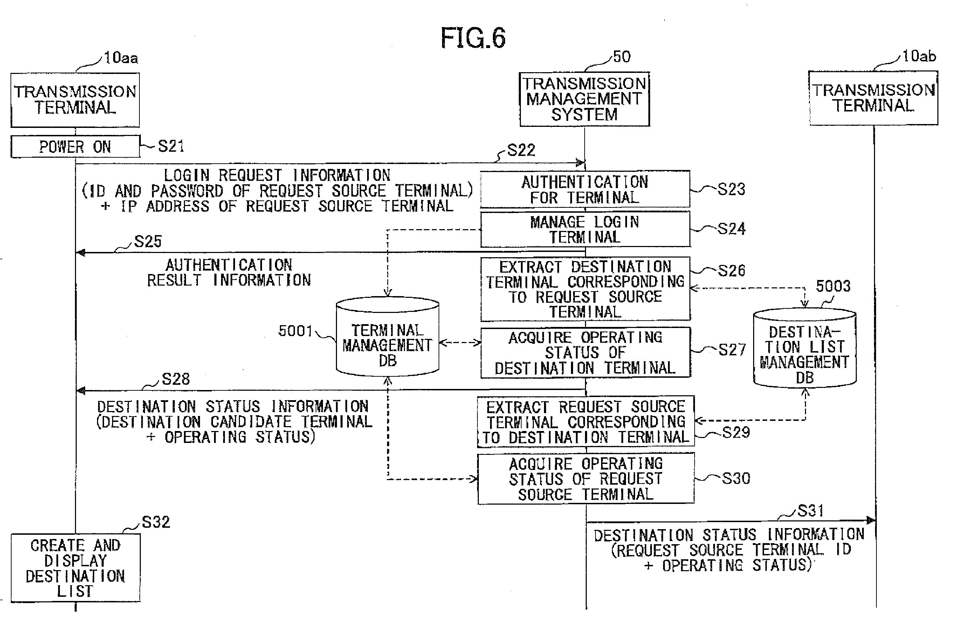

FIG. 6 is a sequence diagram illustrating an example of a procedure at a stage of preparation for starting communication among the plurality of transmission terminals 10. With reference to FIG. 6, the procedure of the transmission terminal 10aa preparing for starting communication with the transmission terminal 10ab will be described.

First, in a case where a user turns the power switch 109 shown in FIG. 3 ON, the operation input reception unit 12 shown in FIG. 5 receives the operation of turning power ON, and turns the power ON (step 321). Then, on receiving the above-described operation of power ON as a trigger, the login request unit 13 sends automatically login request information indicating login request to the transmission management system 50 from the transmission/reception unit 11 via the communication network 2 (step S22). The login request can be send at an arbitrary timing by a user's operation in addition to the timing of turning the power ON. The login request information includes a communication ID and a password for identifying the transmission terminal 10aa which is a request source terminal. Meanwhile, in a case of sending the login request information from the transmission terminal 10aa to the transmission management system 50, the transmission management system 50 on a reception side can perceive an IP address of the transmission terminal 10aa. Meanwhile, in a case where a mobile terminal 20 is the request source terminal, the operation input reception unit 12 receives a login operation by the user, and sends a communication ID and a password to the transmission management system 50.

Next, the authentication unit 52 of the transmission management system 50 authenticates the terminal by determining whether a communication ID and a password, which are the same as the communication ID and the password included in the login request information received via the transmission/reception unit 51, are managed in the authentication management table (step S23). In the explanation of the present embodiment, the terminal is assumed to be authenticated.

In a case where the authentication unit 52 authenticates the transmission terminal 10, the status management unit 53 stores, in the terminal management table, the communication ID of the transmission terminal 10aa, an operating status, and the IP address of the transmission terminal 10aa associated with one another (step S24). Meanwhile, the operating status at this time indicates "online", and the participant ID remains blank.

The transmission/reception unit 51 of the transmission management system 50 sends authentication result information indicating an authentication result obtained by the authentication unit 52 to the transmission terminal 10aa, which requests to login, via the communication network 2 (step S25).

The terminal extraction unit 54 of the transmission management system 50 searches the destination list management table using the communication ID "01aa" of the transmission terminal, which requires to login, as a search key, and extracts a terminal by reading out a communication ID of a candidate of a transmission terminal 10 that can communicate with the transmission terminal 10aa (step S26). Here, the respective communication IDs "01ab", "01ba", "02ab", "02ac'' and "02ad" of the destination terminals (01ab, 01ba, 02ab, 02ac and 02ad), which correspond to the communication ID "01aa" of the transmission terminal 10aa, are extracted.

Next the terminal status acquisition unit 55 searches the terminal management table using the communication IDs of the transmission terminals 10ab and 10ba which are extracted by the terminal extraction unit 54 and the mobile terminals 20ab, 20ac and 20ad, as a search key, and reads out an operating status for each communication ID (step S27). For the purpose of illustration here, the transmission terminal 10aa is assumed to be "online" and the other terminals are "offline".

Next, the transmission/reception unit 51 sends destination status information including the communication IDs ("01ab", "01ba", "02ab", "02ac" and "02ad") extracted by the terminal extraction unit and the operating status to the transmission terminal 10aa via the communication network 2 (step S28). The destination status information includes a name registered in the terminal management table. Accordingly the transmission terminal 10aa can perceive the operating status at present of each of the transmission terminals (10ab, 10ba 20ab, 20ac and 20ad) that can communicate with the transmission

Furthermore, the terminal extraction unit 54 of the transmission management system 50 searches the destination list management table using the communication ID "01aa" of the transmission terminal 10aa that requests to login as a search key, and extracts communication IDs of a transmission terminal 10 and a mobile terminal 20 which register the communication ID "01aa" as a candidate for a destination terminal (step S29). In the above-described destination list management table, the communication IDs of the other transmission terminal 10 and mobile terminal 20 which are extracted are "01b", "01ba'', "02ab", "02ac" and "02ad".

Next, the terminal status acquisition unit 55 of the transmission management system 50 searches the terminal management table using the communication ID "01aa" of the transmission terminal 10aa which request to login, as a search key, and acquires an operating status of the transmission terminal 10aa (step S30).

Then, the transmission/reception unit 51 sends the destination status information including the communication ID "01aa" of the transmission terminal 10aa which is acquired in step S30, as above, and the operating status "online" to a transmission terminal 10, an operating status of which is "online" in the terminal management table, among the transmission terminal 10 and the mobile terminal 20 regarding the communication IDs ("01ab", "01ba", "02ab", "02ac" and "02ad'') extracted in step S29, as above (step S31). Therefore, the destination status information is sent to the transmission terminal 10ab.

In a case of receiving information on a destination list and an operating status of a candidate for a destination terminal, the destination list creation unit 17 of the transmission terminal 10aa creates a destination list and causes the display device 120 to display the destination list (step S32). In the destination list in this case, names and operating statuses of the transmission terminals 10ab, 10ba and the mobile terminals 20ab, 20ac, 20ad are displayed.

On the other hand, the same procedure as that of FIG. 6 is performed also for the other transmission terminals 10ab, 10ba and the mobile terminals 20ab, 20ac, 20ad, and thereby the transmission terminal can perceive the operating statuses of the transmission terminal 10 and the mobile terminal 20 which are candidate for destination.

### <Destination list screen>

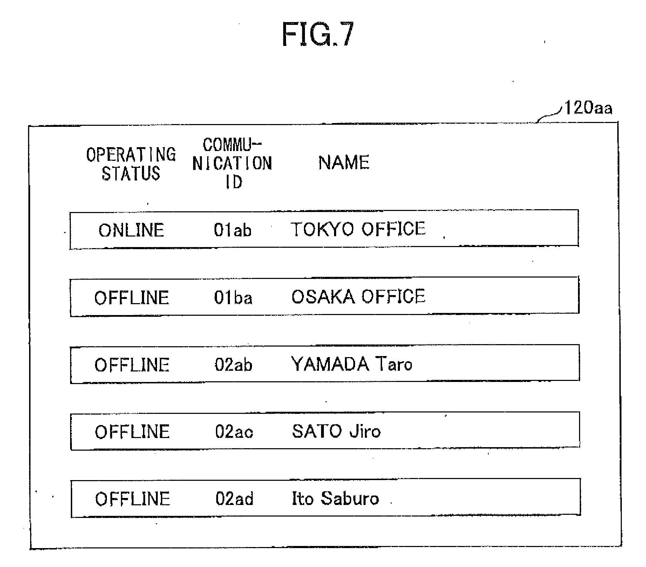

FIG. 7 is a diagram illustrating a display example of the destination list. The destination list creation unit 17 creates a destination list screen, as shown in FIG. 7, using the destination status information sent from the transmission management system 50 in step S28 of FIG. 6. As shown in FIG. 7, the destination list screen includes an operating status of a transmission terminal 10 or a mobile terminal 20, a communication ID of the transmission terminal 10 or the mobile terminal 20, a name or the like.

Since the destination list screen shown in FIG. 7 is a destination list screen displayed on the display device 120aa of the transmission terminal 10aa, operating statuses of the transmission terminals 10ab, 10ba and the mobile terminals 20ab, 20ac, 20ad and the like are displayed. A user of the transmission terminal 10aa can select the transmission terminal 10ab, an operating status of which is "online", and start communication.

In a case where the user selects the transmission terminal 10ab, the communication ID (01ab) of the transmission terminal 10ab is sent to the transmission management system 50. The transmission management system 50 establishes a session between the transmission terminals 10aa and 10ab, and can cause the transmission terminals 10aa and 10ab to start communication. Such a procedure of the transmission terminals 10aa and 10ab starting communication in this way may be referred to as calling the transmission terminal 10ab by the transmission management system 50 or as performing transmission to the transmission terminal 10ab.

### <User authentication>

Next, a procedure of user authentication will be explained taking as an example a case where a person "YAMADA Taro" and a person "SATO Jiro" perform the login using transmission terminal by using the transmission terminal 10ab in the Tokyo office. A transmission terminal 10 displaying a destination list screen is assumed to be the transmission terminal 10aa.

With reference to FIG. 1, as above, relations among a transmission terminal 10, a mobile terminal 20 and a user will be explained. A user "1" who uses the transmission terminal 10ab of the Tokyo office is assumed to be "SATO Jiro", and a user "2" who uses the transmission terminal 10ab is assumed to be "YAMADA Taro". That is, "SATO Tiro" brings the mobile terminal 20 closer to the authentication reception I/F 119 or attaches a SIM card to the authentication reception I/F 119, for example, and becomes a user of the transmission terminal 10ab. "YAMADA Taro" also becomes a user of the transmission terminal 10ab in the same way as above. As shown in the terminal management table, a communication ID (02ab) is assigned to "YAMADA Taro", and a communication ID (02ac) is assigned to "SATO Jiro".

"YAMADA Taro" can also login the transmission management system 50 from the mobile terminal 20 using the communication ID (02ab). Moreover, "SATO Jiro" can also login the transmission management system 50 from the mobile terminal 20 using the communication ID (02ac).

Moreover, "Ito Saburo" corresponds to a user "3", but is assumed not to perform the login using transmission terminal to the transmission terminal 10ba in the Osaka office. Moreover, the mobile terminal 20ad is assumed not to be used.

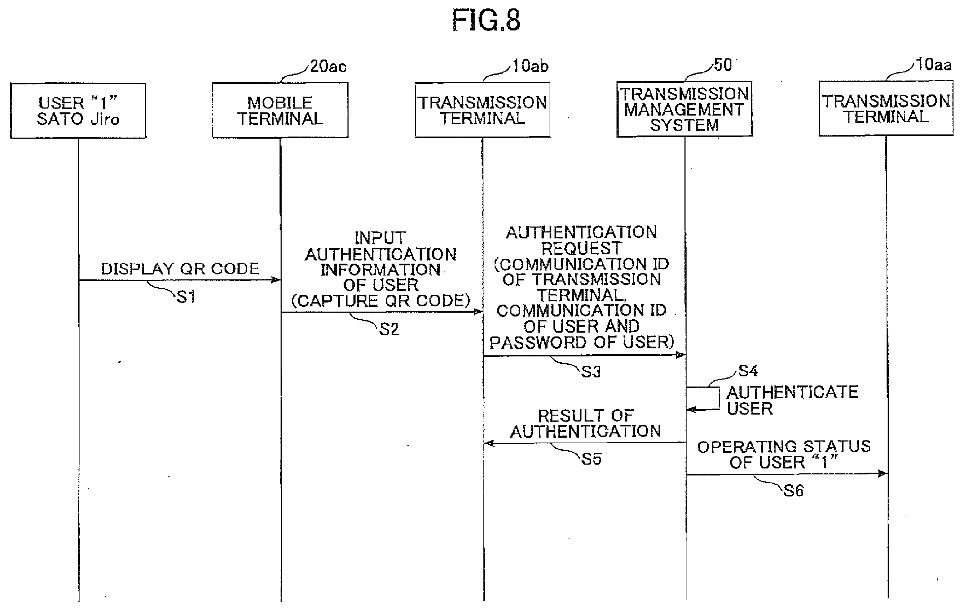

FIG. 8 is a sequence diagram illustrating an example of a procedure of the user ("YAMADA Taro" and "SATO Jiro") of the transmission terminal 10ab requiring the transmission management system 50 of authentication. Meanwhile, the transmission terminal 10ab is assumed to have already logged in the transmission management system 50 according to the procedure shown in FIG. 6. In FIG. 8, the procedure will be explained assuming that "SATO Jiro" performs the login using transmission terminal. "YAMADA Taro" can also perform the login using transmission terminal according to the same procedure.

First, "SATO Jiro" operates the mobile terminal 20 to cause the display unit to display a QR code or a barcode (step S1). Or, authentication information of "SATO Jiro" may be input by bringing an IC card arranged in the mobile terminal 20ac closer to the authentication reception I/F 119 or by attaching a SIM card.

The camera 119a of the transmission terminal 10ab captures the QR code or the barcode (step S2). That is, "SATO Jiro" points the display unit of the mobile terminal 20ac at a capture range of the camera 119a. Accordingly, the user authentication reception unit 18 of the transmission terminal 10ab receives the authentication information of "SATO Jiro". The authentication information includes the communication ID and the password.

The transmission/reception unit 11 of the transmission terminal 10ab sends an authentication request to the transmission management system 50 (step S3). The authentication request includes the communication ID of the transmission terminal 10ab, the communication ID of "SATO Jiro" and the password of "SATO Jiro".

The transmission/reception unit 51 of the transmission management system 50 receives the authentication request (step S4). The authentication unit 52 of the transmission management system 50 authenticates the user according to whether a combination of the communication ID and the password included in the authentication information of "SATO Jiro" coincides with the one that is registered in the authentication management table in advance. In a case where the user is authenticated, the status management unit 53 of the transmission management system 50 registers the communication ID of the transmission terminal 10ab in the field of the authentication terminal ID associated with the communication ID of "SATO Jiro". Furthermore, the communication ID of "SATO Jiro" is registered in the field of the participant ID associated with the communication ID of the transmission terminal 10ab. Details of the above-described processes will be described later with reference to TABLEs 5 to 8.

The transmission/reception unit 51 of the transmission management system 50 sends a result of authentication to the transmission terminal 10ab (step S5).

The transmission/reception unit 51 of the transmission management system 50 sends an operating status of "SATO Jiro" to the transmission terminal 10aa, an operating status of which is "online" in the terminal management table (step S6). In the example shown in the terminal management table of TABLE 3, the operating status of "SATO Jiro" is assumed to be reported to the transmission terminal 10aa.

According to the above-described procedure, in a case where "SATO Jiro" performs the login using transmission terminal, the communication ID of "SATO Jiro" who performs the login using transmission terminal and the communication ID of the transmission terminal 10ab used in the login using transmission terminal are registered in the terminal management table.

### <<Transition of terminal management table>>

According to the procedure shown in FIG. 8, the terminal management table in a case where "SATO Jiro" and "YAMADA Taro" perform the login using transmission terminal will be explained.

**[TABLE 5]**

| Communication ID | Operating status | Name | IP address | Participant ID | Authentication terminal ID |
|---|---|---|---|---|---|
| 01aa | online | Headquarters | 1.2.1.3 | | |
| 01ab | offline | Tokyo office | 1.2.1.4 | | |
| 01ba | offline | Osaka office | 1.2.2.3 | | |
| 02ab | offline | YAMADA Taro | 1.4.1.2 | | |
| 02ac | offline | SATO Jiro | 1.5.1.1 | | |
| 02ad | offline | Ito Saburo | 1.5.1.2 | | |

TABLE 5 illustrates the terminal management table in a state where the transmission terminal 10aa has already logged in, but the transmission terminal 10ab in the Tokyo office has not yet started. In this state, a communication ID is not registered in the fields of the participant ID and the terminal authentication ID.

Next, it is assumed that the transmission terminal 10ab in the Tokyo office starts and the transmission management system 50 authenticates the transmission terminal 10ab (i.e. the transmission terminal 10ab logs in).

**[TABLE 6]**

| Communication ID | Operating status | Name | IP address | Participant ID | Authentication terminal ID |
|---|---|---|---|---|---|
| 01aa | online | Headquarters | 1.2.1.3 | | |
| 01ab | online | Tokyo office | 1.2.1.4 | | |
| 01ba | offline | Osaka office | 1.2.2.3 | | |
| 02ab | offline | YAMADA Taro | 1.4.1.2 | | |
| 02ac | offline | SATO Jiro | 1.5.1.1 | | |
| 02ad | offline | Ito Saburo | 1.5.1.2 | | |

Then, as shown in TABLE 6, the operating status of the transmission terminal 10ab in the Tokyo office becomes "online". In this state, a communication ID is not registered in the fields of the participant ID and the terminal authentication ID.

**[TABLE 7]**

| Communication ID | Operating status | Name | IP address | Participant ID | Authentication terminal ID |
|---|---|---|---|---|---|
| 01aa | online | Headquarters | 1.2.1.3 | | |
| 01ab | online | Tokyo office | 1.2.1.4 | 02ac | |
| 01ba | offline | Osaka office | 1.2.2.3 | | |
| 02ab | offline | YAMADA Taro | 1.4.1.2 | | |
| 02ac | online | SATO Jiro | 1.5.1.1 | | 01ab |
| 02ad | offline | Ito Saburo | 1.5.1.2 | | |

TABLE 7 illustrates the terminal management table in a state where "SATO Jiro" is authenticated as a first user by the transmission management system 50. The status management unit 53 of the transmission management system 50 links the communication ID (02ac) of the authenticated user "SATO Jiro" to the communication ID (01ab) of the transmission terminal 10ab, which sends authentication information, and registers the communication ID (02ac) in the field of the participant ID. Therefore, in the field of the participant ID of the communication ID "01ab", the communication ID "02ac" is registered. Moreover, in the field of the authentication terminal ID, the communication ID (01ab) of the transmission terminal 10ab, which is used in the login using transmission terminal in association with the communication ID (02ac), is registered.

**[TABLE 8]**

| Communication ID | Operating status | Name | IP address | Participant ID | Authentication terminal ID |
|---|---|---|---|---|---|
| 01aa | online | Headquarters | 1.2.1.3 | | |
| 01ab | online | Tokyo office | 1.2.1.4 | 02ac, 02ab | |
| 01ba | offline | Osaka office | 1.2.2.3 | | |
| 02ab | online | YAMADA Taro | 1.4.1.2 | | 01ab |
| 02ac | online | SATO Jiro | 1.5.1.1 | | 10ab |
| 02ad | offline | Ito Saburo | 1.5.1.2 | | |

TABLE 8 illustrates the terminal management table in a state where "YAMADA Taro" is authenticated as a second user by the transmission management system 50. The status management unit 53 of the transmission management system 50 links the communication ID (02ab) of the authenticated user "YAMADA Taro" to the communication ID (01ab) of the transmission terminal 10ab, which sends authentication information, and registers the communication ID (02ab) in the field of the participant ID. Therefore, in the field of the participant ID of the communication ID "01ab", the communication ID "02ab" is registered. Moreover, in the field of the authentication terminal ID, the communication ID (01ab) of the transmission terminal 10ab, which is used in the login using transmission terminal in association with the communication ID (02ab), is registered.

### <<Destination list screen by other terminal>>

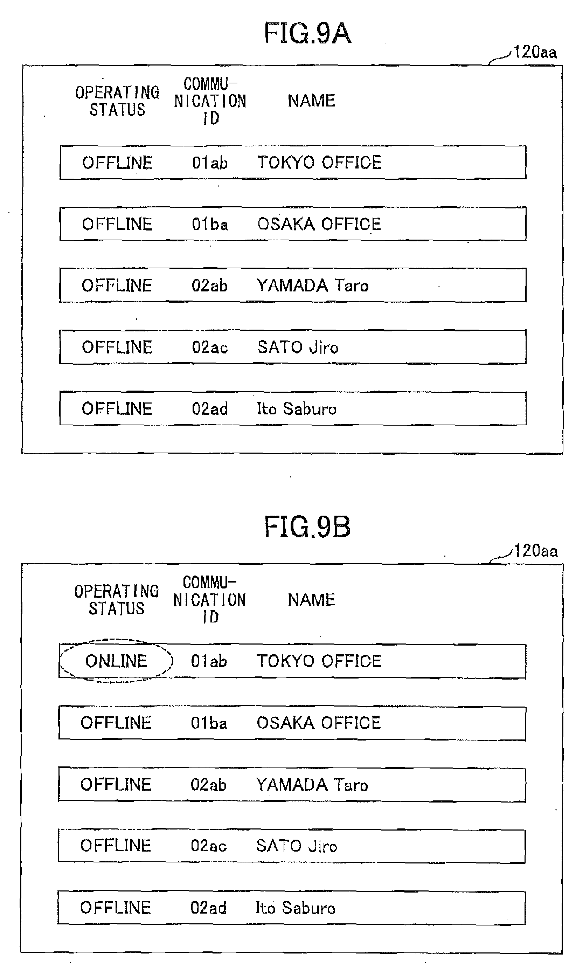

Transitions of the destination list screen displayed on the display device 120aa of the transmission terminal 10aa will be described. FIG. 9A illustrates the destination list screen displaying operating statuses of the transmission terminal 10, which is a candidate for a destination, and the mobile terminal 20, before the transmission terminal 10ab in the Tokyo office is started. In the destination list screen of the transmission terminal 10aa, the operating status as shown in FIG. 9A is displayed. Here, all the transmission terminals 10 and the mobile terminals 20 are assumed to be "offline".

Next, the transmission terminal 10ab is assumed to be started and authenticated by the transmission management system 50. Then, the operating status of the transmission terminal 10ab in the Tokyo office in the terminal management table becomes "online", as shown in TABLE 6. Accordingly, as shown in FIG. 9B, in the destination list screen displayed on the display device 120aa of the transmission terminal 10aa, the operating status of the transmission terminal 10ab in the Tokyo office becomes "online".

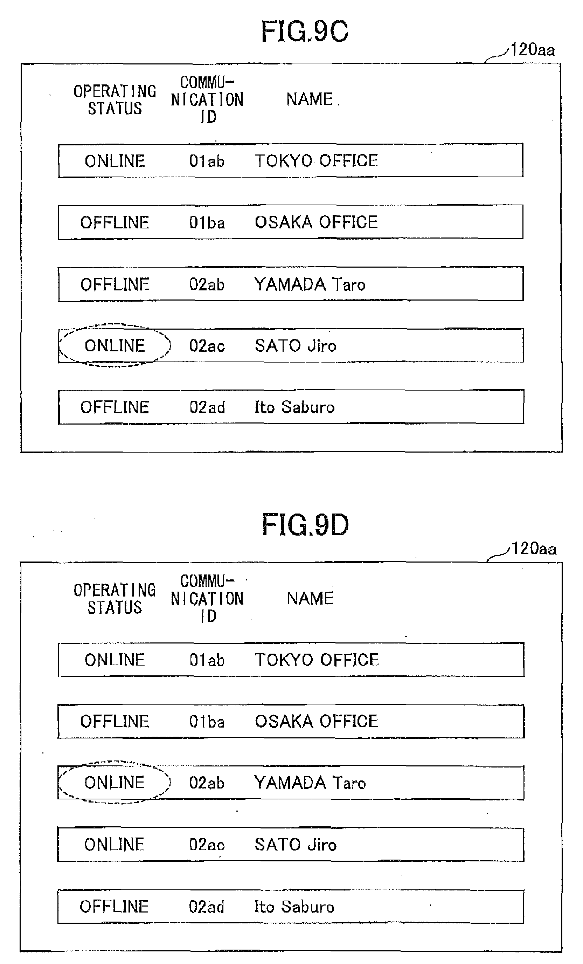

Next, "SATO Jiro" is assumed to perform the login using transmission terminal as a first user. In this case, as shown in FIG. 9C, in the destination list screen displayed on the display device 120aa of the transmission terminal 10aa" the operating status of "SATO Jiro" becomes "online",

Similarly, "YAMADA Taro" is assumed to perform the login using transmission terminal as a second user. In this case, as shown in FIG. 9D, in the destination list screen displayed on the display device 120aa of the transmission terminal 10aa, the operating status of "YAMADA Taro" becomes "online".

In the present embodiment, in a case where the destination list screen is displayed as shown in FIG. 9D, whichever of "YAMADA Taro" and "SATO Jiro" the user of the transmission terminal 10aa specifies, the transmission terminal 10ab in the Tokyo office is called. Therefore, whichever of "YAMADA Taro" and "SATO Jiro" the user of the transmission terminal 10ab specifies, it is possible to start communication with "YAMADA Taro" or "SATO Jiro". Moreover, also in a case of specifying the transmission terminal 10, it is possible to start communication with "YAMADA Taro" or "SATO Jiro".

### <Transmission to destination terminal>

Transmission to a destination terminal according to the present embodiment will be described. In a transmission system 1 according to the related art, in a case where a user of a request source terminal selects a transmission terminal 10 or a mobile terminal 20 from destination candidates, a transmission management system 50 directly calls the transmission terminal 10 or the mobile terminal 20 selected by the user.

On the other hand, in the present embodiment, in a case where transmission is performed to the communication ID of the user who performs the login using transmission terminal, the transmission management system 50 performs transmission to the transmission terminal 10 which the user uses for the login using transmission terminal (i.e. calls transmission terminal 10).

Moreover, in a case where transmission is performed to the transmission terminal 10, the transmission management system 50 performs transmission directly to the transmission terminal 10.

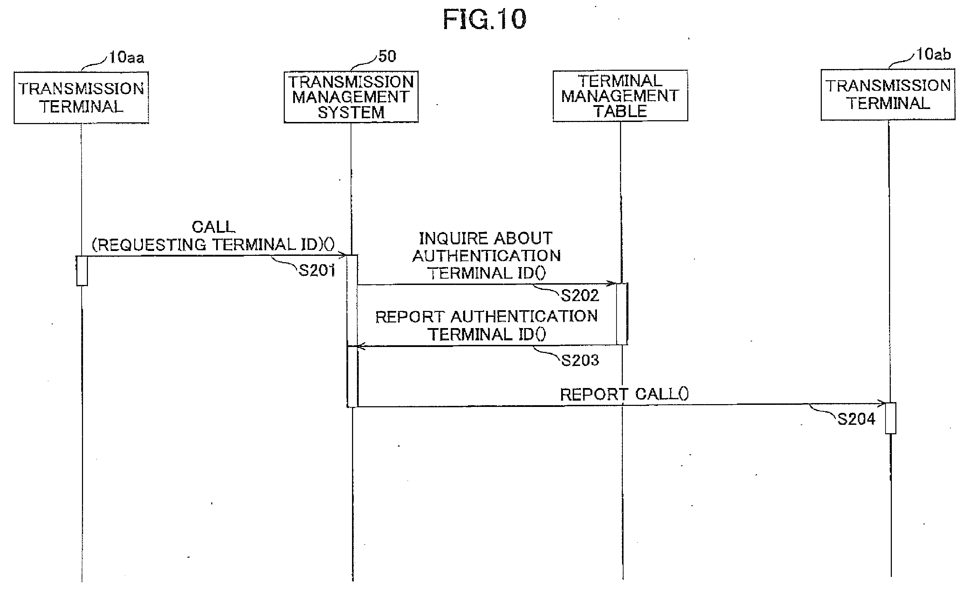

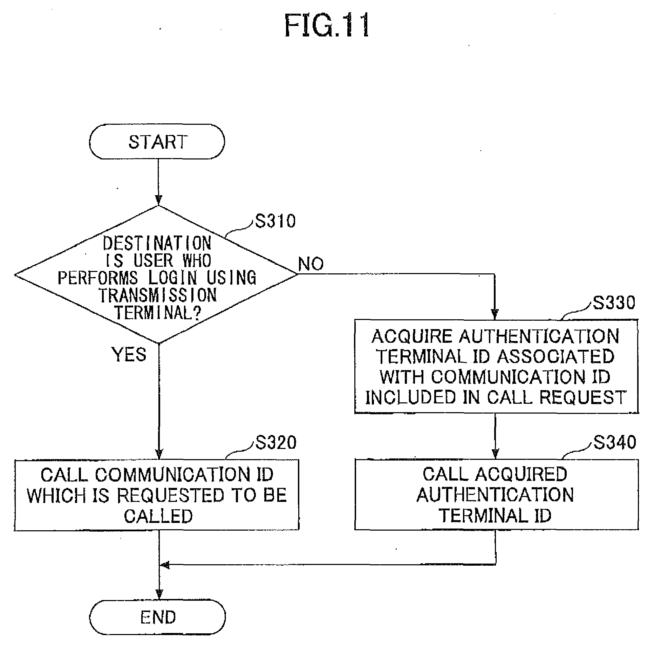

In the following, a procedure of the transmission management system 50 calling the destination terminal will be described with reference to FIGs. 10 and 11. FIG. 10 is a sequence diagram illustrating an example of a procedure of a user of the transmission terminal 10aa calling a user using another transmission terminal 10 as a destination. FIG. 11 is a flowchart illustrating an example of an operation procedure of the transmission management system 50.

The operation input reception unit 12 of the transmission terminal 10 receives a selection of a transmission terminal 10 of a destination candidate or of a user, the transmission/reception unit 11 sends transmission request to the transmission management system 50 (step S201). The transmission request includes a communication ID of the selected terminal. In the present embodiment, it is assumed that a communication ID of the user is selected.

The transmission/reception unit 51 of the transmission management system 50 receives the transmission request (step S202). The terminal status acquisition unit 55 inquires the terminal management table about an authentication terminal ID associated with the communication ID included in the transmission request.

The terminal management table returns the authentication terminal ID associated with the communication ID included in the transmission request to the terminal status acquisition unit 55 (step S203). According to the authentication terminal ID, a communication ID of a transmission destination (the transmission terminal 10 used by the user for the login using transmission terminal) can be found.

The transmission management system 50 performs transmission to the transmission terminal 10ab of the communication ID acquired from the terminal management table (step S204).

Next, the procedure will be explained with reference to FIG. 11. The process in FIG. 11 starts in a case where the transmission management system 50 acquires a transmission request in FIG. 10.

The terminal status acquisition unit 55 determines whether the communication ID of the destination included in the transmission request is the communication ID of the user who performs the login using transmission terminal (step S310). This determination is performed according to whether the communication ID is registered in the field of the authentication terminal ID associated with the communication ID included in the transmission request. Or, it may be performed according to whether the communication ID included in the transmission request is registered in the field of the participant ID.

In a case where the communication ID of the destination is the communication ID of the user (step S310: YES), since the transmission terminal 10 or the mobile terminal 20 is called, the transmission management system 50 performs transmission to the communication ID included in the transmission request (step S320).

In a case where the communication ID of the destination is not the communication ID of the user (step S310: NO), the terminal status acquisition unit 55 of the transmission management system 50 acquires an authentication terminal ID associated with the communication ID included in the transmission request from the terminal management table (step S330). Or, the terminal status acquisition unit 55 may search for a participant ID which is the same as the communication ID included in the transmission request, and acquire the communication ID associated with the participant ID.

Then, the transmission management system 50 performs transmission to a transmission terminal 10 of the authentication terminal ID acquired from the terminal management table (step S340).

Therefore, according to the present embodiment, even in a case where one transmission terminal 10 is shared by a plurality of users, a user who calls a destination terminal using the transmission system 1 may select any one of a transmission terminal 10 used by another party with whom the user desires to communicate and a user of the transmission terminal 10. Accordingly, it becomes possible to save trouble of performing transmission in a case where the number of transmission terminals 10 or mobile terminals 20 registered in the destination list management table is great or in a case where the transmission terminal 10 used by the other party of the communication is unknown.

### <<Display example of destination list screen>>

Next, several examples of the destination list screen will be described.

FIG. 12A is a diagram illustrating an example of the destination list screen according to the present embodiment. The destination list screen shown in FIG. 12A is a destination list screen in a state where "SATO Jiro" and "YAMADA Taro" login the transmission management system 50 via the transmission terminal 10ab, in the same way as FIG. 9D.

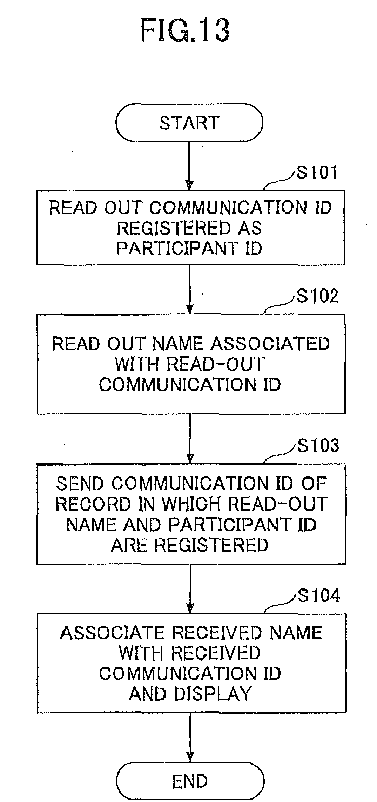

Different from FIG. 9D, in the field of the name of the transmission terminal 10ab, "YAMADA Taro" and "SATO Jiro" is displayed as participants. A process of displaying the above-described destination list screen is performed according to the procedure as shown in FIG. 13. FIG. 13 is a flowchart illustrating an example of the procedure of the transmission terminal 10 displaying the destination list screen.

The terminal status acquisition unit 55 of the transmission management system 50 reads out a communication ID registered in the field of the participant ID from the terminal management table (step S101).

The terminal status acquisition unit 55 reads out a name ("YAMADA Taro" and "SATO Jiro") associated with the read-out communication ID from the terminal management table (step S102).

The transmission/reception unit 51 sends the read-out name and a communication ID registered in the field of the participant ID to the transmission terminal 10aa which is online and a mobile terminal 20 (step S103).

The destination list creation unit 17 of the transmission terminal 10aa and the mobile terminal 20 displays the received communication ID and the received name (i.e. name of a user who performs the login using transmission terminal) associated with each other.

In the destination list screen, as shown in FIG. 12A, a user of the transmission terminal 10aa only has to select the transmission terminal 10ab of the Tokyo office as a destination in order to communicate with "YAMADA Taro" and "SATO Jiro". Moreover, also in a case of selecting "YAMADA Taro" or "SATO Jiro" as a destination, as described above, the transmission terminal 10ab of the Tokyo office can be called.

FIG. 12B is a diagram illustrating an example of the destination list screen in a case where some transmission terminals 10 are in meeting. Compared with FIG. 12A, the operating statuses of the communication ID "01ab, 02ab, 02ac" indicate "in meeting". Meanwhile, the state labelled by "online" indicate a state where a transmission terminal 10, a mobile terminal 20 or a user logs in. The state labelled by "in meeting" indicate a state where after "online" the transmission terminal 10aa, for example, performs transmission to the transmission terminal 10ab as a destination terminal, the transmission terminal 10ab performs response permission and content data are communicated.

In a case where the transmission terminal 10ab performs the response permission, the status management unit 53 of the transmission management system 50 changes the operating statuses of the transmission terminals 10aa, 10ab in the terminal management table to "in meeting". Moreover, the status management unit 53 determines whether a communication ID is registered in the field of the participant ID of the transmission terminal 10aa or 10ab, the operating status of which becomes "in meeting" in the terminal management table. In a case where the communication ID is registered in the field of the participant ID, a user who participates also ought to be in meeting, and an operating status of the communication ID of the user registered in the participant ID is changed to "in meeting".

The terminal status acquisition unit 55 reads out the communication ID which is "in meeting" from the terminal management table, and send the communication ID along with the operating status to the transmission terminal 10aa. Therefore, the transmission terminal 10aa can display the destination list screen as shown in FIG. 12B.

In this way, in the present embodiment, in a case where the transmission terminals 10aa, 10ab are in during communication with each other, operating statuses of all users who perform the login using transmission terminal are also "in meeting". Therefore, a user, who will participate in a meeting in the middle, can perceive that a user desired to be communicated has already participated in the meeting, which is being held. Therefore, in a case of selecting the communication ID of the user who participates in the meeting, by the same operation as the operation of performing transmission, it is possible to participate in the meeting in the middle, and to conduct a conference with the user desired to be communicated.

### <In a case where transmission terminal used for login using transmission terminal is not permitted>

In order to register a communication ID in the destination list management table, permission of a user of the communication ID to be registered is required. The permission in the present embodiment means that a user of the transmission terminal 10, which will be a destination candidate, or a mobile terminal 20 permits registration of a communication ID of the transmission terminal 10 or the mobile terminal 20 before the communication ID is registered in the destination list management table. In a case where the user permits, the transmission management system 50 registers the communication ID of the transmission terminal 10 used by the user, who permits, or of the user in the destination list management table, associated with the communication ID of the request source terminal. Therefore, registering the communication ID in the destination list management table means that it is permitted by the user of the communication ID.

For example, assume that the transmission terminal 10aa is permitted by the transmission terminal 10ab in the Tokyo office, "YAMADA Taro" and "SATO Jiro". In this case, the user of the transmission terminal 10ab, "YAMADA Taro" and "SATO Jiro" permits that the communication IDs of the transmission terminal 10ab, "YAMADA Taro" and "SATO Jiro" are registered for a destination candidate of the transmission terminal 10aa.

The above-described permission provides an effect of preventing the own communication ID from being included arbitrarily in destination candidates of others.

Furthermore, the user of the transmission terminal 10ab in the Tokyo office, "YAMADA Taro" and "SATO Jiro" cannot register arbitrarily the communication IDs of the transmission terminal 10ab, "YAMADA Taro" and "SATO Jiro" for the destination candidate of the transmission terminal 10aa. That is, unless the user of the transmission terminal 10aa in the Tokyo office desires (unless a process of registration is performed), the communication IDs are not registered for the destination candidate of the transmission terminal 10aa. In this way, in order to register the communication ID in the destination list management table, mutual permission for the request source terminal and the destination is required.

In a case of not being registered as a destination in the destination list management table, the user of the request source terminal cannot communicate with a user of the destination. However, in the present embodiment, in a case where the user of the request source terminal is permitted by the user of the destination, it is possible to call the transmission terminal 10 which is not permitted by the user of the request source terminal performing transmission to the user of the destination. That is, a transmission terminal 10 which is not displayed in the destination list screen can be called.

In the following, it will be explained with reference to the destination list management table and the destination list screen.

**[TABLE 9]**

| Communication ID | Destination list | | | | |
|---|---|---|---|---|---|
| 01aa | | 01ba, | 02ab, | 02ac, | 02ad |
| 01ab | 01aa, | 01ba, | 02ab, | 02ac, | 02ad |
| 01ba | 01aa, | 01ab, | 02ab, | 02ac, | 02ad |
| 02ab | 01aa, | 01ab, | 01ba, | 02ac, | 02ad |
| 02ac | 01aa, | 01ab, | 01ba, | 02ab, | 02ad |
| 02ad | 01aa, | 01ab, | 01ba, | 02ab, | 02ac |

TABLE 9 illustrates an example of the destination list management table. For the destination list of the communication ID (01aa), 01ba, 02ab, 02ac and 02ad are registered. This means that the user of the transmission terminal 10 of the communication ID (01ba) and users, to whom the transmission ID (02ab, 02ac, 02ad) are assigned, permits to be destination candidates of the transmission ID (01aa), Moreover, the user of the transmission terminal 10aa of the transmission ID (01aa) desires the communication IDs (01ba, 02ab, 02ac and 02ad) to be destination candidates.

However, in the destination list management table, shown in TABLE 9, 01ab as a communication ID is not registered for the destination candidates of the communication ID (01aa). Therefore, the transmission terminal 10aa cannot display the transmission terminal 10ab in the destination list screen.

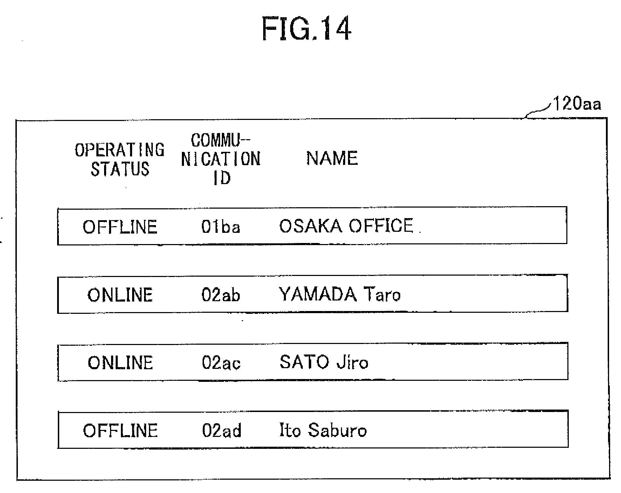

FIG. 14 is a diagram illustrating an example of the destination list screen, which is created from the destination list management table, as shown in TABLE 9, and is displayed by the transmission terminal 01aa. Since the communication ID 01ab is not registered for the destination candidate of the communication ID (01aa) in the destination list management table, the transmission terminal 10ab is not displayed also in the destination list screen. Therefore, in the related art, the user of the transmission terminal 10aa cannot call the transmission terminal 10ab.

On the other hand, in the transmission system 1 according to the present embodiment, the user of the transmission terminal 10aa selects "YAMADA Taro" or "SATO Jiro" to perform transmission to the transmission terminal 10ab. Therefore, in a case where another party desired to be communicated stays at a movement destination by a business trip or the like and uses a transmission terminal 10 which the another party does not use usually, a user of the request source terminal (transmission terminal 10aa) can communicate with the another party on the business trip by the transmission terminal 10.

For example, in a case where there is not the transmission terminal 10ba which has been mutually permitted, but there is another transmission terminal 10ab, the user on the business trip performs the login using transmission terminal for the transmission terminal 10ab, and thereby the user of the transmission terminal 10aa can communicate with the user on the business trip.

Therefore, if a communication ID which has been mutually permitted is assigned to a user, even in a case where the user uses the transmission terminal 10 which is not authenticated mutually in advance, without requiring a new mutual permission, this user and a user who has been mutually permitted can start communication.

Meanwhile, since the transmission terminal 10aa and the user on the business trip have a relation of having mutually permitted in advance, the effect of communicating only with a user who has been permitted is not undermined.

### <Destination list screen in a case where a plurality of users use a transmission terminal>

As described above, the destination list screen that the transmission terminal 10aa displays is explained. In the following, a destination list screen that the transmission terminal 10ab displays will be described.

In a case where "YAMADA Taro" and "SATO Jiro" perform the login using transmission terminal for the transmission terminal 10ab, the transmission terminal 10ab can display three destination list screens, i.e. a destination list screen based on the destination list management table for the transmission terminal 10ab, a destination list screen based on the destination list management table for "YAMADA Taro" and a destination list screen based on the destination list management table for "SATO Jiro".

The destination list creation unit 17 of the transmission terminal 10ab creates the three destination list screens based on respective pieces of destination status information of the transmission terminal 10ab, "YAMADA Taro" and "SATO Jiro" acquired from the transmission management system 50.

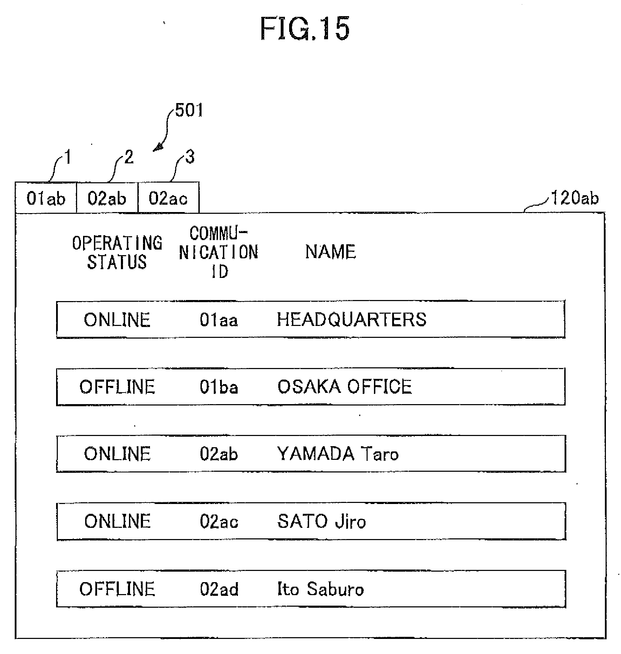

FIG. 15 is a diagram illustrating an example of the destination list screen displayed on the display device 120ab of the transmission terminal 10ab. The destination list screen has a tab 501 (in case of distinguishing three tabs, referred to tabs 1 to 3). On the tabs 1 to 3 in FIG. 15, communication IDs are displayed, but names may be displayed. The tab 1 is a destination list screen for the transmission terminal 10ab, the tab 2 is a destination list screen for "YAMADA Taro" and the tab 3 is a destination list screen for "SATO Jiro". The user ("YAMADA Taro", "SATO Jiro") selects one of the tabs to display any destination list screen. Therefore, even in the case where the transmission terminal 10ab is shared, each user can use own destination list screen to perform transmission.

### <Example of application of transmission system 1 according to present embodiment>

As described above, the preferred mode for carrying out the invention has been described using the embodiments. Further, the present invention is not limited to these embodiments, but various variations and modifications may be made without departing from the scope of the present invention.

For example, in the present embodiment, the user performs the login using transmission terminal for the transmission terminal 10ab. But, the user may perform the login using transmission terminal for the mobile terminal 20. For example, assuming that a user "1" is an owner of the mobile terminal 20, users "2" and "3" around the user "1" may perform the login using transmission terminal for the mobile terminal 20 using their own communication IDs.

Moreover, in the present embodiment, the transmission management system 50 switches the communication ID from which transmission is performed. However, the transmission ID to be sent may be switched on the side of the transmission terminal 10. That is, as shown in FIG. 12A, assume that the communication ID of the user who performs the login using transmission terminal for the transmission terminal 10 and the communication ID of the transmission terminal 10 used for the login using transmission terminal are reported. The transmission terminal for displaying the destination list screen can determine whether the destination selected on the destination list screen corresponds to the user who performs the login using transmission screen. In a case where the user who performs the login using transmission terminal is selected, the transmission terminal 10 sends the communication ID of the transmission terminal 10 used for the login using transmission terminal to the transmission management system 50.

Moreover, even if the destination list screen is not the destination list screen shown in FIG. 12A, in a case where the transmission management system 50 reports the communication ID of the user who performs the login using transmission terminal and the communication ID used for the login using transmission terminal to the respective transmission terminals 10, the same processing is possible.

Moreover, in the present embodiment, the transmission management system 50 includes the terminal management DB 5001, the session management DB 5002, the destination list management DB 5003 and the authentication management DB 5004. However, these databases may be arranged on a network that the transmission management system 50 can refer.

Moreover, the functions or means, with which the transmission management system 50 is provided, as shown in FIG. 5, may be arranged dispersedly among a plurality of information processing apparatuses. Moreover, a plurality of transmission processing systems 50 may exit on the communication network 2.

The communication system disclosed in Japanese Unexamined Patent Application Publication No. 2014-075074 has disadvantage that a user of the terminal device needs time and effort to perceive which terminal device is used by another user with whom the user desires to conduct a video conference. That is, only by authenticating one user who uses the terminal device by the cloud service, it is difficult to cause another user to perceive which terminal device is used by the user (one user) with whom the other user desires to conduct a video conference.

In the transmission system described in Japanese Unexamined Patent Application Publication No. 2014-060551, there is a problem that a user of one terminal device cannot specify a user of the other terminal to start communication, but has to specify the terminal device itself to start the communication. For example, in a case where a terminal device used by a user "A" displays a name of a user "B" and identification information of a terminal device used by the user "B", even if the user "A" selects the name of the user "B", the user "A" cannot start communication with the user "B". The user "A", who searches the user "B" to start communication, has to select the terminal device which the user "B" uses. This process may be a burden to the user "A".

According to the present invention, a transmission system, in which a user of a terminal device easily selects a communication partner with whom the user desires to communicate, can be provided.

The present application is based on and claims the benefit of priority of Japanese Priority Applications No. 2015-003313, filed January 9, 2015, the entire contents of which are hereby incorporated by reference.

## Claims

1. A transmission system comprising:
a request source terminal including
a first transmission unit configured to send a transmission request including communication identification information of a destination; and
an information processing apparatus including
a reception unit configured to receive the transmission request;
a readout unit configured to read out from a storage device, identification information registration information in which communication identification information of a first terminal and communication identification information of a user who uses the first terminal are registered, the communication identification information of the first terminal and the communication identification information of the user being associated with each other; and
a determination unit configured to determine a terminal of the destination to be called in response to the transmission request according to whether the communication identification information of the destination included in the transmission request is registered in the identification information registration information as the communication identification information of the user.

2. The transmission system according to claim 1,
wherein communication identification information of a using user who uses a first terminal is registered in the identification information registration information in association with communication identification information of the first terminal,
wherein in a case where the communication identification information included in the transmission request is registered in the identification information registration information as the communication identification information of the using user, the determination unit is configured to determine to call the first terminal, the communication identification information of which is associated with the communication identification information of the using user in the identification information registration information, and
wherein in a case where the communication identification information included in the transmission request is not registered in the identification information registration information as the communication identification information of the using user, the determination unit is configured to determine to call a second terminal which is specified by the communication identification information included in the transmission request.

3. The transmission system according to claim 2,
wherein communication identification information of a used terminal which a user uses is registered in the identification information registration information in association with communication identification information of the user,
wherein in a case where the communication identification information of the used terminal is registered in the identification information registration information in association with the communication identification information of the user which is the same as the communication identification information included in the transmission request, the determination unit is configured to determine to call the used terminal, communication identification information of which is associated with the communication identification information of the user, and
wherein in a case where the communication identification information of the used terminal is not registered in the identification information registration information in association with the communication identification information of the user which is the same as the communication identification information included in the transmission request, the determination unit is configured to determine to call the second terminal which is specified by the communication identification information included in the transmission request.

4. The transmission system according to claim 3,
wherein the information processing apparatus is configured to send to the request source terminal a list of communication identification information of a destination which the request source terminal can select,
wherein the request source terminal includes:
a destination list display unit configured to display a destination list screen generated based on the list; and
a selection reception unit configured to receive a selection of a user as a destination from the destination list screen,
wherein the first transmission unit is configured to send the transmission request including communication identification information of the user received by the selection reception unit to the information processing apparatus,
wherein the determination unit of the information processing apparatus is configured to determine to call a used terminal, communication identification information of which is registered in the identification information registration information in association with the communication identification information of the user included in the transmission request, or a first terminal, communication identification information of which is associated with the communication identification information of the user included in the transmission request as the communication identification information of the using user.

5. The transmission system according to claim 3,
wherein the first terminal which the user uses includes:
an identification information reception unit configured to receive an input of communication identification information of the user; and
a second transmission unit configured to send to the information processing apparatus the communication identification information of the user, the input of which the identification information reception unit receives, and communication identification information of the first terminal, which the user uses,
wherein the reception unit of the information processing apparatus is configured to receive the communication identification information of the user and the communication identification information of the first terminal,
wherein the information processing apparatus further includes:
an authentication unit configured to authenticate the user based on the communication identification information of the user; and
an information registration unit configured to register, in a case where the authentication unit determines that an authentication is established, the communication identification information of the first terminal that the reception unit receives in association with the communication identification information of the user received by the reception unit into the identification information registration information as communication identification information of the used terminal.

6. The transmission system according to claim 5,
wherein in a case where the authentication unit determines that the authentication is established, the information registration unit is configured to register, in association with the communication identification information of the first terminal that the reception unit receives, the communication identification information of the user that the reception unit receives into the identification information registration information as the communication identification information of the using user.

7. The transmission system according to any one of claims 2 to 6,
wherein in a case where the communication identification information included in the transmission request is registered in the identification information registration information as the communication identification information of the using user who uses the first terminal, or in a case where communication identification information of the used terminal that the user uses is registered in the identification information registration information in association with communication identification information of the user which is the same as the communication identification information included in the transmission request,
the information processing apparatus is configured to send a first name of the first terminal and a second name of the user to the request source terminal, upon sending to the request source terminal a list of communication identification information of the first terminal and the user that the request source terminal can select as a destination, and
wherein the request source terminal displays the second name and the first name associated with each other.

8. The transmission system according to claim 7,
wherein the information registration unit is configured to register, in a case where the request source terminal and the first terminal start communication, that an operating status is during communication in association with the communication identification information of the first terminal in the identification information registration information,
wherein the information registration unit is configured to register, in a case where the communication identification information of the using user who uses the first terminal is registered in the identification information registration information in association with the communication identification information of the first terminal, that the operating status is during communication in association with the communication identification information of the user which is the same as the communication identification information of the using user,
wherein the information registration unit is configured to send to the request source terminal, the operating status of the first terminal and the operating status of the user which are registered in association with the communication identification information of the user, and
wherein the request source terminal displays operating statuses indicating during communication in association with the second name and the first name, respectively.

9. An information processing apparatus, comprising:
a reception unit configured to receive a transmission request including communication identification information of a destination from a request source terminal;
a readout unit configured to read out from a storage device, identification information registration information in which communication identification information of a first terminal and communication identification information of a user who uses the first terminal are registered, the communication identification information of the first terminal and the communication identification information of the user being associated with each other; and
a determination unit configured to determine a terminal of the destination to be called in response to the transmission request according to whether the communication identification information of the destination included in the transmission request is registered in the identification information registration information as the communication identification information of the user.

10. A transmission method, comprising:
sending from a request source terminal, a transmission request including communication identification information of a destination;
receiving at an information processing apparatus the transmission request;
reading out from a storage device, identification information registration information in which communication identification information of a first terminal and communication identification information of a user who uses the first terminal are registered, the communication identification information of the first terminal and the communication identification information of the user being associated with each other; and
determining a terminal of the destination to be called in response to the transmission request according to whether the communication identification information of the destination included in the transmission request is registered in the identification information registration information as the communication identification information of the user.

11. A non-transitory computer-readable storage medium storing a program for causing a computer of an information processing apparatus to execute a process of calling a terminal of a destination in response to a transmission request from a request source terminal, the process comprising:
receiving the transmission request including communication identification information of the destination;
reading out from a storage device, identification information registration information in which communication identification information of a first terminal and communication identification information of a user who uses the first terminal are registered, the communication identification information of the first terminal and the communication identification information of the user being associated with each other; and
determining the terminal of the destination to be called in response to the transmission request according to whether the communication identification information of the destination included in the transmission request is registered in the identification information registration information as the communication identification information of the user.
